(19) Europäisches Patentamt
European Patent Office
Office européen des brevets

(11) **EP 4 226 143 B1**

(12) **FASCICULE DE BREVET EUROPEEN**

(45) Date de publication et mention
de la délivrance du brevet:
**01.01.2025 Bulletin 2025/01**

(21) Numéro de dépôt: **21790140.4**

(22) Date de dépôt: **07.10.2021**

(51) Classification Internationale des Brevets (IPC):
*G01N 21/03* *(2006.01)*  *G01N 21/3504* *(2014.01)*
*G01J 3/02* *(2006.01)*  *G01J 3/10* *(2006.01)*
*G01J 3/42* *(2006.01)*  *H01K 1/14* *(2006.01)*
*H01K 7/02* *(2006.01)*

(52) Classification Coopérative des Brevets (CPC):
**G01N 21/3504; G01J 3/0205; G01J 3/108;
G01J 3/42; G01N 21/031; H01K 1/14; H01K 7/02;**
G01N 2201/06186

(86) Numéro de dépôt international:
**PCT/EP2021/077795**

(87) Numéro de publication internationale:
**WO 2022/074169 (14.04.2022 Gazette 2022/15)**

(54) **SOURCE DE LUMIÈRE INFRAROUGE OPTIMISÉE POUR CAPTEUR DE GAZ, ET SON PROCÉDÉ DE FABRICATION**

FÜR GASSENSOREN OPTIMIERTE INFRAROT-LICHTQUELLE UND VERFAHREN ZU IHRER HERSTELLUNG

INFRARED LIGHT SOURCE OPTIMIZED FOR GAS SENSORS, AND METHOD OF ITS FABRICATION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **10.10.2020 FR 2010377**

(43) Date de publication de la demande:
**16.08.2023 Bulletin 2023/33**

(73) Titulaire: **Elichens**
**38040 Grenoble (FR)**

(72) Inventeurs:
• **GALISULTANOV, Ayrat**
**38040 Grenoble (FR)**
• **DUPREZ, Hélène**
**38040 Grenoble (FR)**

(74) Mandataire: **INNOV-GROUP**
**209 Avenue Berthelot**
**69007 Lyon (FR)**

(56) Documents cités:
EP-A1- 1 612 540      US-A- 5 285 131
US-A1- 2015 192 517      US-B2- 10 386 298

**Description**

**DOMAINE TECHNIQUE**

L'invention concerne une source de lumière infra-rouge notamment destinée à être utilisée dans un capteur de gaz.

**ART ANTERIEUR**

Le recours à des méthodes optiques pour l'analyse d'un gaz est assez fréquent. Des dispositifs permettent de déterminer la composition d'un gaz en se basant sur le fait que les espèces composant un gaz présentent des propriétés spectrales d'absorption différentes les unes des autres. Ainsi, connaissant une bande spectrale d'absorption d'une espèce gazeuse, sa concentration peut être déterminée par une estimation de l'absorption de la lumière traversant le gaz, en utilisant la loi de Beer Lambert. Ce principe permet une estimation de la concentration d'une espèce gazeuse présente dans le milieu.

La source de lumière est usuellement une source émettant dans l'infrarouge, la méthode utilisée étant usuellement désignée par le terme anglosaxon "NDIR détection", l'acronyme NDIR signifiant Non Dispersive Infra-Red. Un tel principe a été fréquemment mis en oeuvre, et est par exemple décrit dans de nombreux documents, par exemple dans US5026992 ou WO2007064370.

Selon les procédés les plus courants, le gaz analysé s'étend entre une source de lumière et un photodétecteur, dit photodétecteur de mesure, ce dernier étant destiné à mesurer une onde lumineuse transmise par le gaz à analyser, et partiellement absorbée par ce dernier. Les procédés comprennent généralement une mesure d'une onde lumineuse, dite onde lumineuse de référence, émise par la source, et non absorbée par le gaz analysé.

La comparaison entre l'onde lumineuse en présence de gaz et l'onde lumineuse sans gaz permet de caractériser le gaz. Il s'agit par exemple de déterminer une quantité d'une espèce gazeuse dans le gaz, selon la technologie désignée par le terme "NDIR par absorption". Il peut également s'agir d'estimer une quantité de particules dans le gaz, en détectant une lumière diffusée par ce dernier selon une plage angulaire de diffusion prédéterminée.

Pour concevoir un capteur NDIR, il est usuel d'utiliser une source de lumière se présentant sous la forme d'un filament incandescent. Ce type de source de lumière est peu onéreux et présente une émission spectrale proche de celle d'un corps noir.

Des exemples de capteurs de gaz ont été décrits dans les documents WO2018162848, ou WO2019081838. Ces capteurs comportent une enceinte, destinée à être occupée par le gaz à analyser. De façon classique, l'enceinte est délimitée par des parois réfléchissantes. Lorsque la lumière se propage entre la source de lumière et un photodétecteur, elle peut subir de nombreuses réflexions sur les parois réfléchissantes.

D'autres capteurs de gaz, de type NDIR, ont été décrits dans US2015/192517, EP1612540 ainsi que US10386298. US5285131 décrit une source de lumière infra-rouge.

Les inventeurs ont conçu une source de lumière particulièrement adaptée à être intégrée dans des capteurs de gaz de type NDIR, et par exemple les capteurs décrits dans les documents précédemment cités. La source de lumière conçue par les inventeurs permet d'augmenter une quantité de lumière détectée par le photodétecteur. Les inventeurs proposent également un procédé de réalisation simple à mettre en oeuvre, permettant d'obtenir une source de lumière optimisée.

**EXPOSE DE L'INVENTION**

Un premier objet de l'invention est une source de lumière infrarouge, notamment pour capteur de gaz, comportant :

- un élément d'émission, s'étendant selon un plan radial, autour d'un centre de l'élément d'émission, l'élément d'émission étant configuré pour s'échauffer, l'échauffement conduisant à une émission de lumière infra-rouge ;
- une cavité, dans laquelle s'étend l'élément d'émission, la cavité étant délimitée par un capot, disposé face à l'élément d'émission, le capot comportant une face interne, disposée en regard de l'élément d'émission et une face externe, définissant une interface entre le capot et un milieu extérieur à la source de lumière;
- le capot s'étendant, parallèlement à un axe transversal, perpendiculaire au plan radial, selon une épaisseur, entre la face interne et la face externe;
- la face externe comportant :

  · une partie centrale plane, s'étendant autour d'un centre de la face externe, le centre de la face externe étant aligné avec le centre de l'élément d'émission, selon l'axe transversal ; la source de lumière étant caractérisée en ce que la face externe comporte :

- au moins une partie périphérique, adjacente de la partie centrale, la partie périphérique étant inclinée par rapport à la partie centrale selon un angle d'inclinaison,

- de telle sorte que dans la partie périphérique, l'épaisseur du capot diminue en fonction d'une distance par rapport à la partie centrale.

La partie périphérique peut s'étendre de part et d'autre de la partie centrale.

L'élément d'émission peut être une membrane. L'élément d'émission peut être parcouru par une piste conductrice, de telle sorte que sous l'effet d'un courant électrique circulant dans la piste conductrice, l'élément d'émission de lumière s'échauffe.

Selon un mode de réalisation, la partie centrale s'étend de préférence parallèlement au plan radial.

La partie périphérique est de préférence inclinée, par rapport à la partie centrale, selon un angle d'inclinaison compris entre 5° et 30°, et de préférence compris entre 5° et 25° ou entre 5° et 20°. Selon un mode de réalisation,

- la partie centrale s'étend parallèlement à un axe longitudinal radial et à un axe latéral, l'axe longitudinal étant perpendiculaire à l'axe latéral ;
- la partie périphérique s'étend parallèlement à un premier axe longitudinal et à un premier axe latéral;
- le premier axe longitudinal est incliné, selon l'angle d'inclinaison, par rapport à l'axe longitudinal;
- le premier axe latéral est parallèle à l'axe latéral.

Selon une possibilité, la source de lumière comporte une deuxième partie périphérique, adjacente de la partie centrale, telle sorte que :

- la deuxième partie périphérique s'étend parallèlement à un deuxième axe longitudinal et un deuxième axe latéral;
- le deuxième axe latéral est incliné, selon un deuxième angle d'inclinaison, par rapport à l'axe latéral;
- le deuxième axe longitudinal est parallèle à l'axe longitudinal.

La deuxième partie périphérique peut s'étendre de part et d'autre de la partie centrale.

Selon un mode de réalisation, la partie périphérique s'étend selon une longueur comprise entre 100 $\mu$m et 600 $\mu$m, de part et d'autre de la partie centrale, la longueur étant déterminée selon l'axe longitudinal ou selon l'axe latéral. D'une façon plus générale, la partie périphérique peut s'étendre selon une longueur comprise entre 5% et 50% de la longueur du capot, la longueur étant déterminée selon l'axe longitudinal et/ou selon l'axe latéral.

Selon un mode de réalisation, au moins une partie périphérique, voire chaque partie périphérique, est inclinée, par rapport à la partie centrale, selon différents angles d'inclinaison, les angles d'inclinaison augmentant avec la distance par rapport à la partie centrale.

De préférence, la partie centrale est centrée par rapport à l'élément d'émission, selon l'axe transversal.

La face externe peut s'étendre, selon une longueur, le long d'un axe parallèle au plan radial, comprise entre 500 $\mu$m et 2500 $\mu$m.

Un deuxième objet de l'invention est un capteur de gaz, comportant une enceinte configurée pour contenir un gaz, ainsi qu'une source de lumière et au moins un photodétecteur, la source de lumière étant configurée pour émettre un rayonnement lumineux se propageant, à travers l'enceinte, vers le photodétecteur, la source de lumière étant une source de lumière selon le premier objet de l'invention.

Le capteur de gaz peut être tel que l'enceinte est délimitée par au moins une première paroi réfléchissante, s'étendant perpendiculairement au plan radial de la source de lumière, parallèlement à l'axe transversal.

Le capteur de gaz peut être tel que la face externe du capot de la source de lumière comporte une partie centrale plane, s'étendant selon un plan parallèle au plan radial et passant par le centre de la face externe, et dans lequel :

- la partie centrale s'étend parallèlement à un axe longitudinal et un axe latéral, l'axe longitudinal étant préférentiellement perpendiculaire à l'axe latéral ;
- la partie périphérique s'étend parallèlement à un premier axe longitudinal et à un premier axe latéral;
- le premier axe longitudinal est incliné, selon un angle d'inclinaison, par rapport à l'axe longitudinal;
- le premier axe latéral est parallèle à l'axe latéral;

la source de lumière étant agencée de telle sorte que l'axe longitudinal est perpendiculaire à la première paroi réfléchissante.

Le capteur de gaz peut être tel que lequel l'enceinte est délimitée par une deuxième paroi réfléchissante, s'étendant parallèlement à la première paroi réfléchissante, la source de lumière s'étendant entre les deux parois réfléchissantes. Il est alors préférable que la partie périphérique s'étende de part et d'autre de la partie centrale.

Un troisième objet de l'invention est un procédé de réalisation d'une source de lumière infrarouge, faisant l'objet du premier mode de réalisation, comportant :

a) obtention d'une source de lumière, la source de lumière comprenant un élément d'émission, s'étendant parallèlement à un plan radial, autour d'un centre de l'élément d'émission, l'élément d'émission étant configuré pour s'échauffer, l'échauffement conduisant à une émission de lumière infrarouge, et disposé dans une cavité délimitée par un capot, le capot s'étendant entre une face interne, disposée face à l'élément d'émission, et une face externe, la face externe s'étendant parallèlement au plan radial, autour d'un centre de la face externe, le centre de la face externe étant aligné avec le centre de l'élément d'émission, selon un axe transversal, perpendiculaire au plan radial, la distance entre la face interne et la face externe définissant une épaisseur du capot ;
b) usinage de la face externe, de façon à former, dans la face externe, au moins une partie périphérique, adjacente d'une partie centrale plane de la face externe, passant par le centre de la face externe, et parallèle au plan radial, la partie périphérique étant inclinée par rapport à la partie centrale de telle sorte que dans la partie périphérique, l'épaisseur du capot diminue en fonction d'une distance par rapport au centre de la face externe.

Le procédé peut comporter, au cours de l'étape b), une formation de plusieurs parties périphériques, s'étendant respectivement à partir de la partie centrale, et inclinées par rapport à un plan parallèle au plan radial et passant par le centre de la face externe.

L'usinage peut comporter l'application d'un outil de coupe comportant une lame inclinée par rapport au plan radial, contre la face externe du capot.

Le procédé peut comporter une translation de l'outil de coupe par rapport à la face externe. Le procédé peut comporter une utilisation successive de plusieurs outils de coupe, chaque outil de coupe comportant une lame inclinée par rapport au plan radial selon un angle d'inclinaison, les angles d'inclinaison de deux outils de coupes différents étant différents.

Le procédé peut être tel que :

- l'étape a) comporte une obtention d'une pluralité de sources de lumière, de telle sorte que les éléments d'émission respectifs de chaque source de lumière sont coplanaires, et s'étendent respectivement dans une cavité, les cavités respectives de chaque source de lumière étant délimitées par un même capot, chaque cavité étant centrée par rapport à un centre de la face externe ;
- l'étape b) est mise en oeuvre autour de chaque centre de la face externe, de façon à former, au niveau de chaque centre, au moins une partie périphérique, adjacente d'une partie centrale plane, passant par ledit centre de la face externe, et parallèle au plan radial, la partie périphérique étant inclinée par rapport à la partie centrale de telle sorte que dans la partie périphérique, l'épaisseur du capot diminue en fonction d'une distance par rapport au centre de la face externe.

Un quatrième objet de la présente divulgation, non-revendiqué, est un procédé de réalisation d'une source de lumière, comportant :

i. obtention d'une source de lumière de base, la source de lumière de base comprenant un élément d'émission, s'étendant parallèlement à un plan radial, autour d'un centre de l'élément d'émission, et disposé dans une cavité délimitée par un capot de base, le capot de base s'étendant entre une face interne, disposée face à l'élément d'émission, et une première face, la première face du capot de base s'étendant parallèlement au plan radial ;
ii. obtention d'un capot auxiliaire, s'étendant entre une deuxième face et une face externe, la distance entre la deuxième face et la face externe définissant une épaisseur du capot auxiliaire, la face externe comportant un centre de la face externe ;
iii. usinage de la face externe du capot auxiliaire, de façon à ménager, dans la face externe, au moins une partie périphérique, adjacente d'une partie centrale plane, la partie centrale passant par le centre de la face externe, et étant parallèle à la deuxième face, la partie périphérique étant inclinée par rapport à la partie centrale de telle sorte que dans la partie périphérique, l'épaisseur du capot auxiliaire diminue en fonction d'une distance par rapport au centre de la face externe;
iv. assemblage du capot auxiliaire contre le capot de base, la deuxième face étant au contact de la première face, l'assemblage étant effectué de telle sorte que le centre de la face externe soit aligné par rapport au centre de l'élément d'émission, parallèlement à un axe transversal perpendiculaire au plan radial.

Selon le quatrième object, le procédé peut comporter :

- au cours de l'étape i), une obtention d'une pluralité de sources de lumières de base, réparties selon le plan radial, chaque source de lumière de base comprenant un élément d'émission, s'étendant parallèlement à un plan radial autour d'un centre de l'élément d'émission, et disposé dans une cavité délimitée par un capot de base, le capot de base s'étendant entre une face interne, disposée face à chaque élément d'émission, et une première face, la première face du capot de base s'étendant parallèlement au plan radial ;
- au cours de l'étape ii), une obtention d'un capot auxiliaire tel que la face externe du capot auxiliaire comporte plusieurs centres de la face externe ;
- au cours de l'étape iii) une formation, dans la face externe du capot auxiliaire, d'une pluralité de parties périphériques, respectivement autour d'une pluralité de partie centrales, chaque partie centrale passant par un centre de la face externe, et étant parallèle à la deuxième face, chaque partie périphérique étant inclinée par rapport à la partie centrale de laquelle elle est adjacente, de telle sorte que dans chaque partie périphérique, l'épaisseur du capot auxiliaire diminue en fonction d'une distance par rapport à la partie centrale de laquelle la partie périphérique est adjacente ;
- au cours de l'étape iv), assemblage du capot auxiliaire sur le capot de base, la première face étant assemblée contre la deuxième face, l'assemblage étant effectué de telle sorte qu'au moins un centre de la face externe soit aligné par rapport au centre d'un élément d'émission, parallèlement à un axe transversal perpendiculaire au plan radial.

L'invention sera mieux comprise à la lecture de l'exposé des exemples de réalisation présentés, dans la suite de la description, en lien avec les figures listées ci-dessous.

## FIGURES

La figure 1A montre un exemple de capteur de gaz pouvant comporter une source de lumière selon le premier objet de l'invention.

La figure 1B représente une propagation de la lumière, à partir d'une source de lumière, entre deux parois parallèles réfléchissantes.

La figure 2A schématise une source de lumière infrarouge selon l'art antérieur.

La figure 2B schématise un élément d'émission de lumière prenant la forme d'une membrane parcourue par une piste conductrice.

La figure 2C montre un premier mode de réalisation d'une source de lumière selon l'invention.

Les figures 2D et 2E illustrent une propagation d'un rayon lumineux de part et d'autre de la face externe du capot de la source de lumière, respectivement en considérant une source de lumière selon l'art antérieur et une source de lumière selon l'invention.

La figure 2F est une vue de dessus d'une source de lumière selon le premier mode de réalisation.

La figure 2G est une vue en perspective d'une source de lumière selon le premier mode de réalisation.

La figure 2H est un détail de la face externe d'une source de lumière selon le premier mode de réalisation.

La figure 3A montre une configuration utilisée pour modéliser les rayons émergeant de la source de lumière.

Les figures 3B et 3C sont des histogrammes d'angles de rayons détectés par un photodétecteur modélisé. Ces histogrammes ont été obtenus suite à une modélisation d'une source de lumière respectivement selon l'art antérieur et selon le premier mode de réalisation de l'invention.

Les figures 3D et 3E représentent des tracés de rayons effectués en disposant une source de lumière entre deux parois réfléchissantes planes et parallèles l'une à l'autre. Sur les figures 3D et 3E, la source de lumière est respectivement une source de lumière selon l'art antérieur et selon le premier mode de réalisation.

Les figures 4A à 4C montrent une source de lumière selon un deuxième mode de réalisation.

La figure 4D illustre des résultats d'une optimisation de paramètres géométriques de la face externe, l'objectif étant d'augmenter une proportion de rayons s'étendant selon une plage angulaire de $\pm$ 30° autour d'un axe transversal.

La figure 4E représente un histogramme d'angles de rayons détectés par un photodétecteur modélisé. Cet histogramme a été obtenu suite à une modélisation d'une source de lumière selon le deuxième mode de réalisation de l'invention.

La figure 5A montre une source de lumière selon un troisième mode de réalisation.

La figure 5B représente un histogramme d'angles de rayons détectés par un photodétecteur modélisé. Cet histogramme a été obtenu suite à une modélisation d'une source de lumière selon le troisième mode de réalisation de l'invention.

La figure 5C montre une source de lumière selon un quatrième mode de réalisation.

La figure 5D représente un histogramme d'angles de rayons détectés par un photodétecteur modélisé. Cet histogramme a été obtenu suite à une modélisation d'une source de lumière selon le quatrième mode de réalisation de l'invention.

La figure 5E montre un diagramme de radiation de sources de lumières respectivement selon l'at antérieur, le premier mode de réalisation et le troisième mode de réalisation.

Les figures 6A et 6B représentent une variante du premier mode de réalisation.

Les figures 6C et 6D représentent une variante du deuxième mode de réalisation.

La figure 7 montre un procédé de réalisation permettant d'obtenir une source de lumière selon le premier mode de réalisation ou selon le deuxième mode de réalisation.

La figure 8 montre un procédé de réalisation permettant d'obtenir une source de lumière selon le troisième mode de réalisation ou selon le quatrième mode de réalisation.

La figure 9 schématise un dépôt d'une couche antireflet sur une source de lumière selon l'invention.

La figure 10 montre un cinquième mode de réalisation d'une source de lumière.

La figure 11A représente un autre procédé, non-revendiqué, permettant d'obtenir une source de lumière.

La figure 11B schématise un procédé de fabrication collectif permettant la fabrication de différentes sources de lumière.

Les figures 12A, 12B et 12C schématisent un procédé permettant d'obtenir une source de lumière selon l'art antérieur.

Les figures 13A à 13D montrent des étapes d'usinage du capot supérieur d'une source de lumière.

Les figures 14A et 14B schématisent des substrats formant le capot sources de lumière, respectivement selon le premier mode de réalisation et le deuxième mode de réalisation, issues d'un procédé de formation collective.

## EXPOSE DE MODES DE REALISATION PARTICULIERS

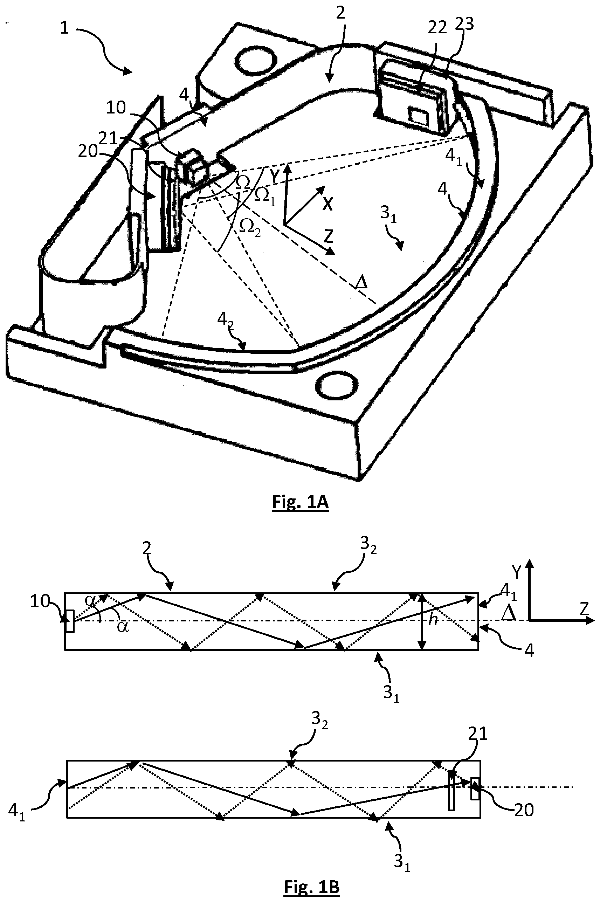

On a représenté, sur la figure 1A, un exemple de capteur de gaz 1, de type NDIR, ce capteur étant décrit dans WO2018162848. Le capteur comporte une enceinte 2, apte à recevoir un gaz à analyser. L'enceinte est délimitée par deux parois $3_1$, $3_2$, dites parois transversales, s'étendant selon un plan transversal XZ. Sur la figure 1A, on a représenté une première paroi transversale $3_1$, la deuxième paroi transversale $3_2$ étant représentée en transparence de façon à visualiser l'intérieur de l'enceinte 2. Les parois transversales $3_1$ et $3_2$ sont représentées sur la figure 1B.

Les parois transversales peuvent être parallèles au plan transversal $P_{XZ}$, ou sensiblement parallèles à ce dernier, le terme sensiblement indiquant qu'une tolérance angulaire, par exemple +/- 20° ou +/- 30° est admise. Elles peuvent être planes ou incurvées.

Le capteur de gaz 1 comporte également une paroi périphérique 4, délimitant l'enceinte 2, et s'étendant entre la première paroi transversale $3_1$ et la deuxième paroi transversale $3_2$. La paroi périphérique 4 s'étend autour d'un axe longitudinal Y, perpendiculaire au plan transversal Pxz. La paroi périphérique 4 prend la forme d'une paroi cylindrique, dont la section, dans le plan $P_{XY}$, comporte des portions courbes $4_1$, $4_2$ et des portions planes. Les portions courbes peuvent notamment être elliptiques. Une portion elliptique suit, selon le plan transversal Pxz, le contour d'une partie d'une ellipse.

Le capteur de gaz 1 comporte une source de lumière 10, apte à émettre une onde lumineuse selon un cône d'émission $\Omega$, le cône d'émission s'étendant autour d'un axe d'émission $\Delta$. La source de lumière 10 est configurée pour émettre l'onde lumineuse selon une bande spectrale d'illumination $\Delta\lambda$. La bande spectrale d'illumination $\Delta\lambda$ s'étend dans l'infrarouge, par exemple entre 1 $\mu$m et 10 $\mu$m.

La première portion courbe $4_1$ est réfléchissante. Elle est configurée pour recevoir une première partie $\Omega_1$ du cône d'émission $\Omega$, de façon à le réfléchir vers un photodétecteur de mesure 20. L'onde lumineuse traverse ainsi le gaz présent dans l'enceinte 2, avant d'être détectée par le photodétecteur de mesure 20. Dans l'exemple considéré, le photodétecteur de mesure 20 est une thermopile, apte à délivrer un signal dépendant de l'intensité de l'onde lumineuse à laquelle est exposé le photodétecteur. Il peut également s'agir d'une photodiode ou d'un autre type de photodétecteur. Le photodétecteur de mesure 20 peut être couplé à un filtre 21 passe-bande, dont la bande spectrale correspond à une bande spectrale d'une espèce gazeuse $G_s$ dont on souhaite déterminer une quantité $C_s$ dans le mélange gazeux. L'intensité $I$ de l'onde lumineuse détectée par le photodétecteur de mesure 20 dépend de la quantité $C_s$ selon la relation de Beer-Lambert :

$$att = \frac{I}{I_0} = e^{-\mu(C_s)l} \quad (1)$$

où :

- $\mu(C_s)$ est un coefficient atténuation, dépendant de la quantité $C_s$ recherchée;
- 1 est l'épaisseur de gaz traversé par l'onde lumineuse dans l'enceinte ;

- $I_0$ est l'intensité de l'onde lumineuse incidente, qui correspond à l'intensité de l'onde qui atteindrait le photodétecteur de mesure 20 en l'absence de gaz absorbant dans l'enceinte.

La comparaison entre $I$ et $I_0$, prenant la forme d'un ratio $\frac{I}{I_0}$, correspond à une atténuation *att* générée par l'espèce gazeuse considérée.

Lors de chaque impulsion de la source de lumière 10, on peut ainsi déterminer $\mu(C_s)$, ce qui permet d'estimer $\hat{C}_s$ sachant que la relation entre $C_s$ et $\mu(C_s)$ est connue.

L'expression (1) suppose une maîtrise de l'intensité $I_0$ de l'onde lumineuse émise par la source de lumière 10. A cet effet, le dispositif peut comporter un photodétecteur de référence 23, agencé de telle sorte qu'il détecte une onde lumineuse, dite onde lumineuse de référence, atteignant le photodétecteur de référence 23 sans interagir avec le gaz présent dans l'enceinte 2, ou sans interagir significativement avec ce dernier. La paroi périphérique 4 comporte à cet effet la deuxième portion réfléchissante $4_2$, configurée pour recevoir une deuxième partie du cône d'émission $\Omega$ émis par la source de lumière 10, de façon à le réfléchir vers le photodétecteur de référence 23. L'intensité de l'onde lumineuse de référence, détectée par le photodétecteur de référence 23, est désignée par le terme intensité de référence $I_{ref}$. Dans cet exemple, le photodétecteur de référence 23 est associé à un filtre optique, dit filtre optique de référence 22. Le filtre optique de référence 22 définit une bande passante correspondant à une plage de longueurs d'onde non absorbées par l'échantillon. La bande passante de référence est par exemple centrée autour de la longueur d'onde 3.91 $\mu$m.La mesure de $I_{ref}$ permet de corriger la valeur de $I_0$, ce qui permet de déterminer $\mu(C_s)$, puis d'estimer $\hat{C}_s$. La mesure de $I_{ref}$ permet notamment de tenir compte des variations temporelles de l'intensité $I_0$ de l'onde lumineuse émise par la source de lumière 10.

Sur la figure 1B, on a représenté une coupe de l'enceinte 2, selon l'axe d'émission $\Delta$, entre la source de lumière 10 et la première partie elliptique $4_1$ de la paroi périphérique 4. La coupe est représentée selon un plan transversal YZ. Dans le plan transversal YZ, le rayonnement est émis par la source de lumière selon une plage angulaire regroupant des angles d'émission $\alpha$ répartis à $\pm 90°$ de part et d'autre de l'axe d'émission $\Delta$. Les parois transversales $3_1$ et $3_2$ sont réfléchissantes. Ainsi, en fonction de l'angle d'émission $\alpha$, le rayonnement peut subir de nombreuses réflexions sur les parois transversales avant d'atteindre la partie elliptique réfléchissante $4_1$. En aval de cette dernière, le rayonnement se propage jusqu'au photodétecteur de mesure 20 en subissant également des réflexions sur les parois transversales.

Par paroi réfléchissante, on entend une paroi dont le coefficient de réflexion, dans tout ou partie de bande spectrale $\Delta\lambda$ de l'onde lumineuse émise par la source de lumière 10, est supérieur à 50%, et de préférence supérieur à 80%. Une paroi réfléchissante peut être formée à l'aide d'un matériau réfléchissant tel un métal, par exemple de l'or.

On comprend que plus l'angle d'émission $\alpha$ est élevé, plus le nombre de réflexions par les parois réfléchissantes $3_1$ et $3_2$ est important. Or, plus le nombre de réflexions est élevé, plus l'intensité du rayonnement émis diminue, du fait de pertes au niveau de chaque réflexion. En outre, le photodétecteur de mesure 20 est généralement couplé à un filtre passe-bande 21. Le filtre passe-bande délimite une bande spectrale correspondant à la bande spectrale d'absorption de l'espèce gazeuse recherchée. Il est préférable que l'angle du rayonnement incident au filtre passe-bande 21 soit le plus proche d'une normale au filtre. Autrement dit, il est préférable que l'angle d'incidence du rayonnement, par rapport à l'axe transversal Z, soit le plus faible possible. Lorsque l'angle d'incidence par rapport au filtre est élevé, la bande passante définie par le filtre peut être modifiée, ce qui dégrade la performance de filtration. Enfin, la variabilité des angles d'émission $\alpha$ par rapport à l'axe transversal Z, dans le plan $P_{YZ}$ entraîne une variabilité des trajets optiques des différents rayons se propageant entre la source de lumière 10 et le photodétecteur de mesure 20. En effet, plus l'angle d'émission $\alpha$ est élevé, plus le nombre de réflexions dans le trajet optique entre la source de lumière 10 et le photodétecteur de mesure 20 est élevé. Les rayons dont l'angle d'émission $\alpha$ est élevé sont donc davantage atténués que les rayons émis selon un angle plus faible.

Les constats décrits dans le paragraphe précédent sont également valables pour les rayonnements se propageant de la source de lumière vers la deuxième partie elliptique $4_2$, puis de cette dernière jusqu'au photodétecteur de référence 23.

Compte tenu des conséquences exposées dans le paragraphe précédent, il est préférable de réduire autant que possible les angles d'émission $\alpha$, par rapport à l'axe d'émission $\Delta$ de la source de lumière (qui correspond à l'axe transversal Z), tout en maintenant le niveau d'intensité de la source de lumière 10. Il s'agit d'un aspect important de l'invention.

La source de lumière 10 peut notamment être impulsionnelle, l'onde lumineuse incidente étant une impulsion de durée généralement comprise entre 100 ms et 1 s. Il peut notamment s'agir d'une source de lumière comportant un élément d'émission 11 de type membrane, parcouru par un filament, ce dernier étant parcouru par un courant électrique impulsionnel. Le filament est une piste conductrice 11' chauffée à une température comprise entre 400°C et 800°C de façon à émettre une lumière infrarouge.

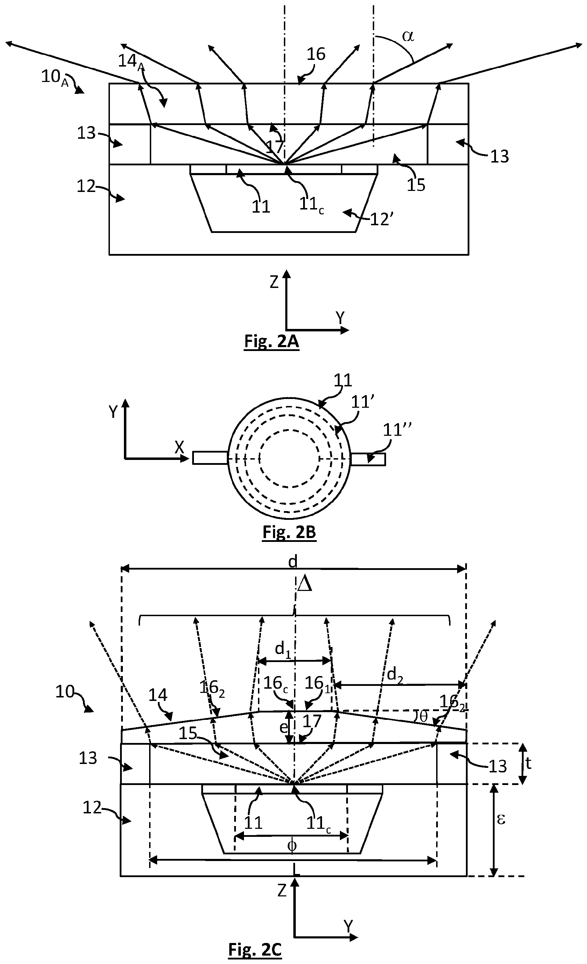

Un exemple de source de lumière de l'art antérieur $10_A$, ou source de lumière de base, est représenté sur la figure 2A. La source de lumière comporte un élément d'émission 11 prenant la forme d'une membrane reliée à un substrat 12 et suspendue sur une ouverture 12' ménagée dans ce dernier. La membrane 11 s'étend dans une cavité 15, placée sous vide. La cavité 15 est délimitée par une paroi annulaire 13 et est refermée par un capot $14_A$. L'élément d'émission 11, dans cet exemple la membrane, s'étend selon un plan radial $P_{XY}$, perpendiculaire à un axe transversal Z. La paroi annulaire 13 relie le capot $14_A$ au substrat 12. Le capot $14_A$ s'étend entre une face interne 17, adjacente de la cavité 15, et une face externe 16. La face interne 17 et la face externe 16 sont parallèles à la membrane 11, c'est-à-dire parallèles au plan radial $P_{XY}$.

Sur la figure 2B, on a représenté une membrane 11 en forme de disque, parcourue par une piste conductrice 11'. La membrane 11 s'étend selon le plan radial $P_{XY}$. La membrane 11 est rattachée, par des bras 11", au substrat 12. Lorsque la piste conductrice 11' est parcourue par un courant électrique, elle s'échauffe et produit un échauffement de la membrane 11. L'échauffement de la membrane 11 peut être considéré comme homogène. Sous l'effet de l'échauffement, la membrane 11 émet un rayonnement infra-rouge dans toutes les directions (c'est-à-dire selon un angle solide de $4\pi$ stéradians). Le spectre du rayonnement infra-rouge, c'est-à-dire l'intensité en fonction de la longueur d'onde, est usuellement considéré comme le spectre d'émission d'un corps gris.

Sur la figure 2A, on a représenté, par des flèches, des tracés de rayons émis à partir du centre $11_c$ de la membrane 11 et se propageant à travers la cavité 15. Dans la réalité, les rayons sont émis à partir de toute la surface de la membrane. On également représenté l'angle d'émission $\alpha$ par rapport à l'axe transversal Z. Le capot de la source de lumière est composé d'un matériau dont l'indice de réfraction est supérieur à celui de l'air dans la bande spectrale d'émission de la membrane 11. Il s'agit par exemple de silicium. Du fait de la variation d'indice de réfraction entre le vide et le silicium d'une part, entre le silicium et l'air d'autre part, l'angle $\alpha$ se réduit à l'interface entre le vide et le silicium, puis augmente à l'interface entre le silicium et l'air.

L'invention concerne une optimisation de la source de lumière, de manière à augmenter la quantité de rayonnement émergeant du capot 14 en ayant un angle d'émission $\alpha$, par rapport à l'axe transversal Z, inférieur à $\pm$ 30° ou à $\pm$ 10°.

Un premier mode de réalisation est représenté sur la figure 2C. Sur cette figure, la source de lumière 10 comporte les mêmes éléments que ceux décrits en lien avec la source de lumière $10_A$ de l'art antérieur, à l'exception du capot 14, ce dernier étant modifié comme décrit par la suite. La membrane 11 s'étend autour d'un centre $11_c$. La face externe 16 s'étend autour d'un centre $16_c$. Selon l'axe transversal Z, le centre de la face externe $16_c$ est aligné avec le centre de la membrane $11_c$. La distance entre la face interne 17 et la face externe 16, selon l'axe transversal Z, correspond à une épaisseur e du capot 14.

La face externe 16 comporte une partie centrale $16_1$, comportant le centre de la face externe $16_c$ et s'étendant autour de ce dernier, selon une longueur $d_1$, parallèlement à l'axe longitudinal Y. La partie centrale $16_1$ s'étend parallèlement au plan radial $P_{XY}$, c'est-à-dire parallèlement à la membrane 11. D'une façon générale, la face externe 16 comporte au moins une partie périphérique $16_2$, adjacente de la partie centrale $16_1$. La partie périphérique $16_2$ est inclinée, selon un angle d'inclinaison $\theta$, par rapport à la partie centrale $16_1$. L'inclinaison est telle qu'au fur et à mesure que l'on s'éloigne de la partie centrale $16_1$, (ou du centre de la face externe $16_c$), selon l'axe longitudinal Y, l'épaisseur e du capot 14 se réduit.

Dans l'exemple représenté, les dimensions L, $\Phi$, $\varepsilon$, e, t, d représentées sur la figure 2C sont : L = 800 $\mu$m ; $\Phi$ = 300 $\mu$m ; $\varepsilon$ = 675 $\mu$m ; t = 120 $\mu$m ; e = 280 $\mu$m ; d = 1140 $\mu$m.

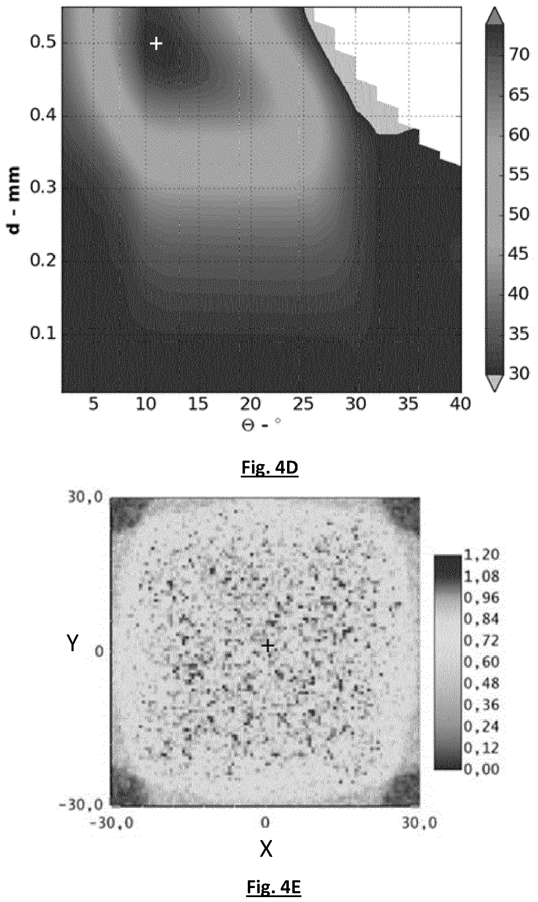

Sur mode de réalisation représenté sur la figure 2C, la source de lumière comporte une partie périphérique $16_2$ inclinée selon l'angle $\theta$ de part et d'autre de la partie centrale $16_1$, selon l'axe longitudinal Y. Chaque partie périphérique $16_2$ s'étend, à partir de la partie centrale $16_1$, selon une longueur $d_2$, définie parallèlement à l'axe longitudinal Y. La longueur $d_2$ ainsi que l'angle d'inclinaison $\theta$ peuvent faire l'objet d'une optimisation, comme décrit en lien avec la figure 4D.

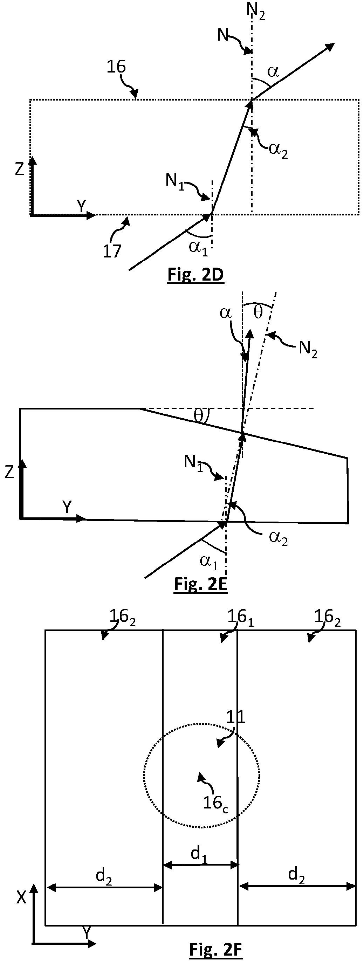

L'inclinaison de la partie périphérique $16_2$ de la face externe 16 a pour effet d'incliner la normale à l'interface silicium/air définie par la surface externe 16. Si $\alpha$ désigne l'angle avec lequel un rayon émerge de la face externe 16 par rapport à l'axe transversal Z, l'inclinaison de la partie périphérique $16_2$ de la face externe 16 permet de réduire l'angle $\alpha$, par rapport à la configuration de l'art antérieur, selon laquelle la face externe 16 n'est pas inclinée. Cet effet est illustré sur les figures 2D et 2E.

La figure 2D illustre une configuration de l'art antérieur. On a représenté un rayon se propageant à travers le capot 14. Les angles $\alpha_1$, $\alpha_2$ et $\alpha$ sont respectivement :

- l'angle d'incidence du rayon par rapport à la normale $N_1$ à la face interne 17 ;
- l'angle d'incidence du rayon par rapport à la normale $N_2$ à la face externe 16 ;
- l'angle du rayon émergeant de la face externe 16 par rapport à l'axe transversal Z.

Dans cet exemple, l'axe transversal Z est parallèle à la normale $N_2$. Le capot 14 est constitué de silicium, dont l'indice de réfraction optique est compris entre 3.4 et 3.5. La cavité 15 est sous vide, l'indice de réfraction du vide étant de 1. Au-delà de la face externe 16, le rayon se propage dans le gaz à analyser, ce dernier pouvant être assimilé à de l'air, d'indice de réfraction égal à 1 : Donc $\alpha = \alpha_1$. Du fait du changement d'indice de réfraction de part et d'autre de l'interface, l'angle $\alpha_2$, dans le capot 14, est inférieur aux angles $\alpha$ et $\alpha_1$.

La figure 2E illustre une configuration telle que représentée sur la figure 2C. De même que sur la figure 2D, on a représenté un rayon se propageant à travers le capot 14. Les angles $\alpha_1$, $\alpha_2$ et $\alpha$ correspondent aux définitions données en lien avec la figure 2D. Sur la figure 2E, le rayon émerge de la partie périphérique $16_2$ de la face externe. La partie périphérique $16_2$ est inclinée par rapport à un plan parallèle au plan radial $P_{XY}$ et passant par le centre $16_c$ de la face externe 16, selon un angle d'inclinaison $\theta$. De ce fait, la normale $N_2$ à l'interface capot 14 / air est également inclinée d'un angle $\theta$ par rapport l'axe transversal Z. L'angle $\alpha$, par rapport à l'axe transversal Z, est inférieur à celui de la configuration de l'art antérieur. La comparaison des figures 2D et 2E montre que l'inclinaison de la face externe 16 résulte en une diminution de l'angle $\alpha$ par rapport à l'art antérieur. Ainsi, l'inclinaison de la partie périphérique $16_2$ de la face externe 16 entraîne une réduction des angles avec lesquels les rayons émergent de la partie périphérique $16_2$, par rapport à la configuration de l'art antérieur, selon laquelle la face externe 16 est plane.

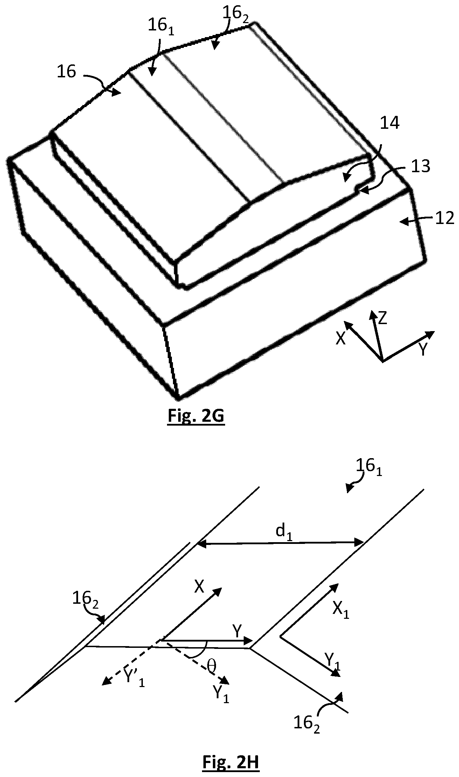

La figure 2F illustre une vue de dessus, c'est-à-dire selon un plan parallèle au plan radial $P_{XY}$, de la source de lumière représentée sur la figure 2C. On a représenté, en pointillés, la membrane 11. La figure 2G est une vue en perspective de la source de lumière représentée sur la figure 2C. Sur la figure 2H, on a représenté la partie centrale $16_1$ de la face externe, plane, et parallèle au plan radial $P_{XY}$. On a également représenté une partie périphérique $16_2$. Le plan radial est défini par un axe latéral X orthogonal à un axe longitudinal Y. La partie périphérique $16_2$ s'étend parallèlement à un plan défini par un premier axe latéral $X_1$ orthogonal à un premier axe longitudinal $Y_1$ (ou $Y_1'$)Selon le mode de réalisation représenté :

- le premier axe latéral $X_1$ est parallèle à l'axe latéral X ;
- le premier axe longitudinal $Y_1$ (ou $Y'_1$) est incliné par rapport à l'axe latéral Y, dans un plan transversal $P_{YZ}$. L'angle d'inclinaison aigu $\theta$ entre les axes $Y_1$ (ou $Y'_1$) et Y correspond à l'angle d'inclinaison de la partie périphérique $16_2$ par rapport à la partie centrale $16_1$.

On a modélisé, par tracé de rayons, différentes configurations correspondant au mode de réalisation illustré sur la figure 2C. On a fait varier l'angle d'inclinaison $\theta$ ainsi que la longueur $d_2$ de la partie périphérique $16_2$. L'objectif est de maximiser une quantité de rayons émergeant de la face externe 16 et se propageant selon un angle $\alpha$ inférieur à $\pm 30°$ par rapport à l'axe transversal Z.

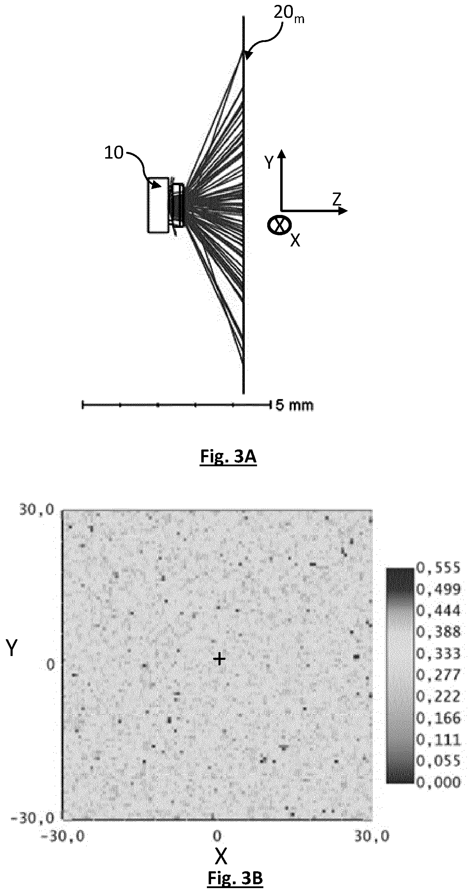

La figure 3A montre une configuration mise en oeuvre pour effectuer les modélisations. La source de lumière 10 est disposée face à un photodétecteur modélisé $20_m$ s'étendant infiniment autour de l'axe transversal Z de la source de lumière 10. La source de lumière est supposée émettre un rayonnement selon un angle solide de $2\pi$ stéradians dans un demi-espace délimité par la source de lumière 10 et comportant le photodétecteur $20_m$. La modélisation est définie afin que l'angle $\alpha$ de chaque rayon émis par la source soit l'opposé de l'angle reçu par le photodétecteur modélisé $20_m$.

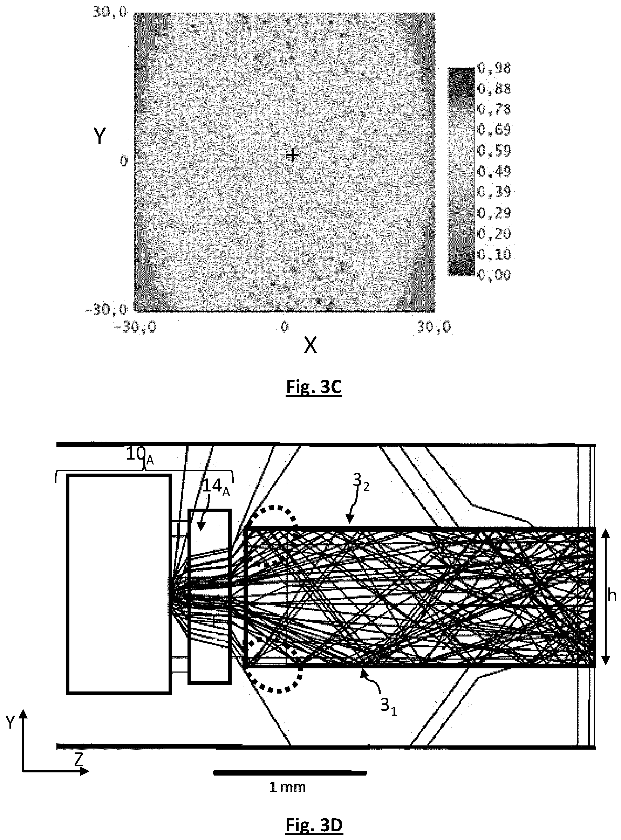

Les figures 3B et 3C sont des histogrammes des angles $\alpha$, par rapport à l'axe transversal Z, des rayons détectés par le photodétecteur $20_m$, en considérant respectivement :

- une source de lumière de l'art antérieur, telle que décrite en lien avec la figure 2A ;
- une source de lumière selon la configuration représentée sur la figure 2C.

Sur les figures 3B et 3C, les axes des abscisses et des ordonnées représentent respectivement les angles, par rapport à l'axe Z, des rayons détectés par le photodétecteur $20_m$, respectivement dans les plans transversaux $P_{XZ}$ et $P_{YZ}$. Le centre de chaque figure, marqué par une croix, correspond à des rayons parallèles à l'axe Z. Sur chaque figure, le niveau de gris représente un nombre de rayons détectés. Sur la figure 3B, l'histogramme est relativement homogène. La distribution angulaire des photons détectés est considérée comme homogène. Sur la figure 3C, on observe un resserrement de l'histogramme autour des faibles angles, dans le plan transversal $P_{YZ}$. Cela montre que l'invention permet d'augmenter la proportion des rayons, émis par la source de lumière 10, et émergeant du capot dans une plage angulaire de $\pm 30°$, voire $\pm 25°$ par rapport à l'axe transversal Z.

Les inventeurs ont effectué des modélisations en faisant varier les paramètres $d_2$ (longueur de chaque parie périphérique parallèlement à l'axe longitudinal Y), et $\theta$ (angle d'inclinaison de chaque partie périphérique). Les paramètres optimaux sont $d_2 = 494\ \mu m$ et $\theta = 11°$. Selon ces paramètres optimaux, 54,6 % des rayons émis par la source de lumière 10, dans le demi-espace comportant le photodétecteur, émergent du capot 14 selon des angles $\alpha$, par rapport à l'axe transversal Z, compris dans la plage angulaire $\pm 30°$. En utilisant une source de lumière de l'art antérieur, telle que décrite en lien avec la figure 2A, cette proportion est de 31%.

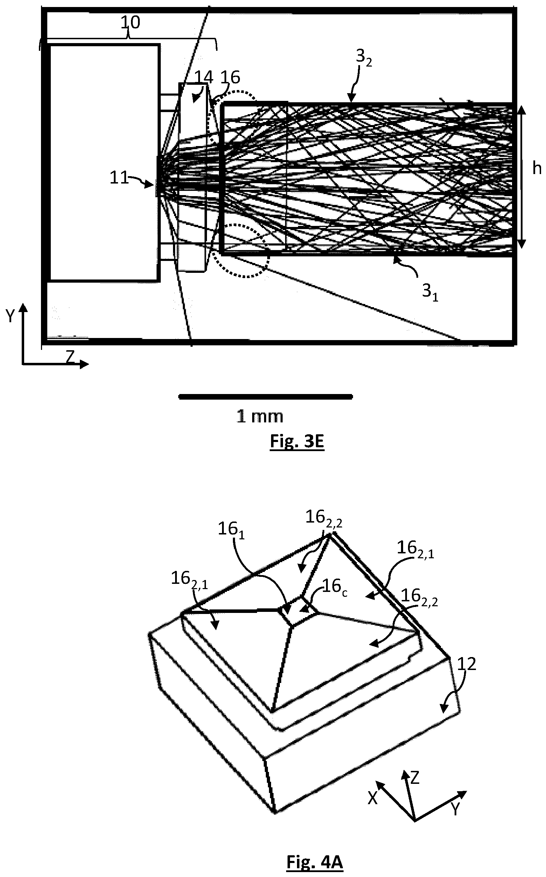

Les figures 3D et 3E représentent des tracés de rayons en disposant respectivement une source de lumière $10_A$ selon l'art antérieur (cf. figure 2A), et une source de lumière 10 selon la configuration représentée sur la figure 2C. Sur chacune de ces figures, la source de lumière est disposée comme représenté sur les figures 1A et 1B : Elle débouche dans l'enceinte 2 du capteur de gaz. Dans cet exemple, la source de lumière est disposée entre deux parois réfléchis-

santes $3_1$ et $3_2$ espacées l'une de l'autre d'une distance h = 1.2 mm. L'axe transversal Z de la source de lumière 10 est parallèle aux parois transversales, et centré par rapport à ces dernières. La comparaison des figures 3D et 3E montrent que l'invention permet d'augmenter la quantité de rayons émergeant de la source de lumière 10 selon un angle $\alpha$ de $\pm 30°$ par rapport à l'axe transversal Z. Sur les figures 3D et 3E, on a contourné des zones correspondant à des rayons émis selon un angle $\alpha$ supérieur à 30°. La configuration selon l'invention (figure 3E) permet de réduire la proportion de rayons traversant ces zones.

Les figures 4A à 4C montrent un deuxième mode de réalisation de l'invention. Selon ce mode de réalisation, la face externe 16 de la source de lumière 10 comporte une partie centrale $16_1$ plane, s'étendant selon un plan parallèle au plan radial $P_{XY}$ et passant par le centre $16_c$ de la face externe 16. La partie centrale $16_1$ s'étend selon un axe latéral X orthogonal à un axe longitudinal Y. La source de lumière 10 comporte également :

- deux parties périphériques, $16_{2.1}$, dites premières parties périphériques, s'étendant de part et d'autre de la partie centrale $16_1$, selon l'axe longitudinal Y. Comme décrit en lien avec le mode de réalisation représenté sur la figure 2C, chaque partie périphérique s'étend selon un premier axe latéral $X_1$ orthogonal à un premier axe longitudinal $Y_1$ (ou $Y'_1$). Le premier axe latéral $X_1$ est parallèle à l'axe latéral X. Le premier axe longitudinal $Y_1$ (ou $Y'_1$) forme un premier angle d'inclinaison aigu $\theta_1$ par rapport à l'axe longitudinal Y.
- deux deuxièmes parties périphériques $16_{2.2}$, s'étendant de part et d'autre de la partie centrale $16_1$, selon l'axe latéral X. Chaque deuxième partie périphérique s'étend selon un deuxième axe latéral $X_2$ (ou $X'_2$) orthogonal à un deuxième axe longitudinal $Y_2$. Le deuxième axe longitudinal $Y_2$ est parallèle à l'axe longitudinal Y. Le deuxième axe latéral $X_2$ forme un deuxième angle d'inclinaison aigu $\theta_2$ par rapport à l'axe latéral X.

Le premier angle d'inclinaison $\theta_1$ et le deuxième angle d'inclinaison $\theta_2$ peuvent former un même angle d'inclinaison $\theta$.

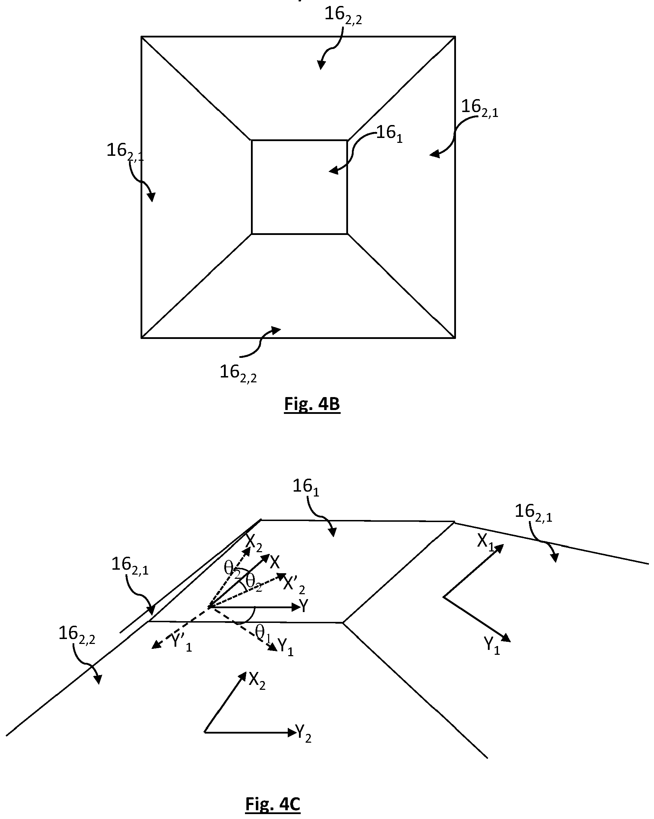

La figure 4A est une vue en perspective du deuxième mode de réalisation. La figure 4B est une vue de dessus du deuxième mode de réalisation. Sur la figure 4C, on a représenté les axes latéral et longitudinal de la partie centrale et de chaque partie périphérique.

Un tel mode de réalisation peut par exemple être adapté à un capteur de gaz tel que décrit en lien avec la figure 1A, mais également à un capteur de gaz dans lequel l'enceinte 2, séparant la source de lumière du photodétecteur, est cylindrique, autour de l'axe transversal Z.

La figure 4D représente un résultat des modélisations effectuées en faisant varier les paramètres $d_2$ (longueur de chaque partie périphérique parallèlement à l'axe longitudinal Y ou à l'axe latéral X) et $\theta$ (angle d'inclinaison de chaque partie périphérique). L'axe des ordonnées correspond à la plage de variation de $d_2$, (unité : mm) et l'axe des abscisses correspond à la plage de variation de $\theta$ (unité : degré). Le niveau de gris correspond à un pourcentage de rayons émergeant du capot 14 dans une plage angulaire de $\pm 30°$ autour de l'axe transversal Z. L'objectif de la modélisation est de déterminer les paramètres maximisant ce pourcentage. Les paramètres optimaux correspondent à la croix tracée sur la figure 4D : $d_2 = 494$ $\mu m$ et $\theta = 11°$. Selon ces paramètres optimaux, 74,5 % des rayons émis par la source de lumière 10, dans le demi-espace comportant le photodétecteur, émergent du capot 14 selon des angles $\alpha$, par rapport à l'axe transversal Z, compris dans la plage angulaire $\pm 30°$. En utilisant une source de lumière de l'art antérieur, telle que décrite en lien avec la figure 2A, cette proportion est de 31%.

La figure 4E est un histogramme des angles $\alpha$, par rapport à l'axe transversal Z, des rayons détectés par le photodétecteur $20_m$. L'histogramme a été réalisé de la même façon que ceux des figures 3B et 3C, en considérant une source de lumière telle que représentée sur les figures 4A à 4C, selon les paramètres optimisés reportés dans le paragraphe précédent.

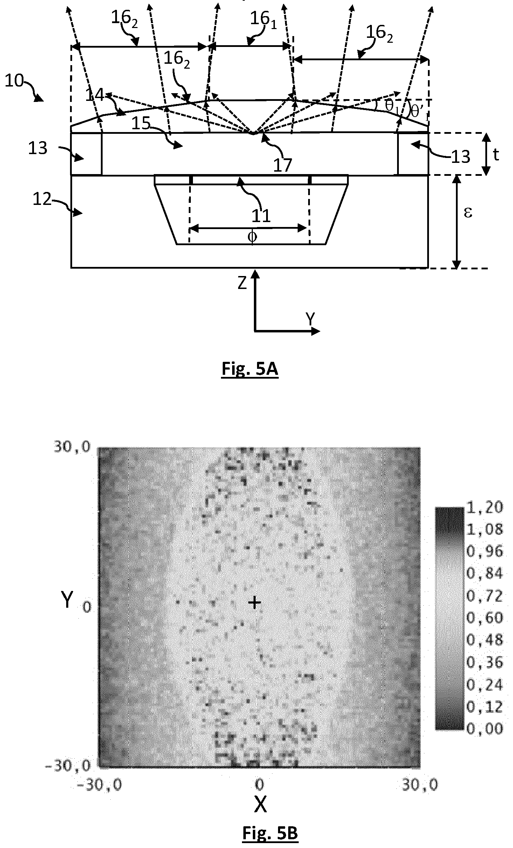

La figure 5A montre un troisième mode de réalisation. Selon ce mode de réalisation, la face externe 16 de la source de lumière 10 comporte une partie périphérique $16_2$ s'étendant, de part et d'autre de la partie centrale, selon un premier angle d'inclinaison $\theta_1$ sur une partie de la longueur de la paroi périphérique $16_2$, puis selon un deuxième angle d'inclinaison $\theta_1'$ sur une autre partie de la longueur de la paroi périphérique $16_2$, avec $\theta'_1 > \theta_1$. Selon ce mode de réalisation, les angles d'inclinaison $\theta_1$, $\theta_1'$ correspondent aux angles aigus entre l'axe longitudinal Y et le premier axe longitudinal $Y_1$ de chaque partie périphérique. Ce mode de réalisation correspond à un perfectionnement du premier mode de réalisation, chaque partie périphérique comportant successivement deux angles d'inclinaison.

Une optimisation a été menée, telle que décrite en lien avec la figure 4D. On a montré que selon une telle configuration, compte tenu des dimensions décrites en lien avec la figure 2C, les angles $\theta_1$ et $\theta'_1$ optimaux sont respectivement égaux à 7,5° (selon une longueur, parallèlement à l'axe longitudinal Y, de 400 $\mu m$), et à 16° (selon une longueur, parallèlement à l'axe longitudinal Y, égale à 120 $\mu m$).

La figure 5B est un histogramme des angles $\alpha$, par rapport à l'axe transversal Z, des rayons détectés par le photodétecteur $20_m$. L'histogramme a été réalisé de la même façon que ceux des figures 3B et 3C, en considérant une source de lumière telle que représentée sur la figure 5A, selon les paramètres optimisés reportés dans le paragraphe précédent.

Sur la figure 5B, les axes des abscisses et des ordonnées représentent respectivement les angles, par rapport à l'axe Z, des rayons détectés par le photodétecteur $20_m$, respectivement dans les plans $P_{XZ}$ et $P_{YZ}$. Le centre la figure 5B, marqué par une croix, correspond à des rayons parallèles à l'axe Z. Le niveau de gris représente un nombre de rayons détectés. On observe un resserrement de l'histogramme autour des faibles angles. Cela montre que l'invention permet d'augmenter la proportion des rayons, émis par la source de lumière 10, et émergeant du capot 14 dans une plage angulaire de $\pm 30°$, voire $\pm 20°$ par rapport à l'axe transversal Z.

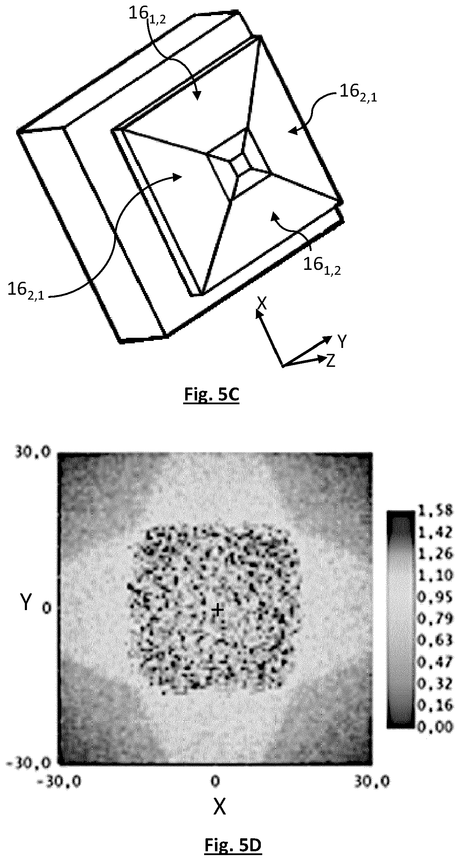

La figure 5C représente un quatrième mode de réalisation selon lequel la face externe 16 comporte deux premières parties périphériques $16_{2,1}$ et deux deuxième parties périphériques $16_{2,2}$ telles que décrites en lien avec le deuxième mode de réalisation.

Chaque première partie périphérique $16_{2,1}$ s'étend selon un premier axe longitudinal $Y_1$ formant, avec l'axe longitudinal Y, un premier angle d'inclinaison aigu $\theta_1$ sur une partie de la longueur de la paroi périphérique, puis selon un deuxième angle d'inclinaison aigu $\theta_1'$ sur une autre partie de la longueur de la paroi périphérique, avec $\theta_1' > \theta_1$.

Chaque deuxième partie périphérique $16_{2,2}$ s'étend selon un deuxième axe latéral $X_2$ formant, avec l'axe latéral X, le premier angle d'inclinaison aigu $\theta_1$ sur une partie de la longueur de la paroi périphérique, puis selon le deuxième angle d'inclinaison $\theta_1'$ sur une autre partie de la longueur de la paroi périphérique, avec $\theta_1' > \theta_1$.

Une optimisation a été menée, telle que décrite en lien avec la figure 4D. On a montré que selon une telle configuration, compte tenu des dimensions décrites en lien avec la figure 2C, les angles $\theta_1$ et $\theta_1'$ optimaux sont respectivement égaux à 7,5° (selon une longueur, parallèlement à l'axe longitudinal Y, de 400 $\mu$m), et à 16° (selon une longueur, parallèlement à l'axe longitudinal Y, égale à 120 $\mu$m). Selon ces paramètres optimaux, 76.7 % des rayons détectés par le photodétecteur $20_m$ émergent de la source de lumière selon des angles, par rapport à l'axe transversal Z, compris dans la plage angulaire $\pm 30°$. En utilisant une source de lumière de l'art antérieur, telle que décrite en lien avec la figure 2A, cette proportion est de 31%.

La figure 5D est un histogramme des angles $\alpha$, par rapport à l'axe transversal Z, des rayons détectés par le photodétecteur $20_m$. L'histogramme a été réalisé de la même façon que ceux des figures 3B, 3C, 4E ou 5B, en considérant une source de lumière telle que représentée sur la figure 5C, selon les paramètres optimisés reportés dans le paragraphe précédent.

Sur la figure 5D, les axes des abscisses et des ordonnées représentent respectivement les angles, par rapport à l'axe Z, des rayons détectés par le photodétecteur $20_m$, respectivement dans les plans $P_{XZ}$ et $P_{YZ}$. Le centre la figure 5D, marqué par une croix, correspond à des rayons parallèles à l'axe Z. Le niveau de gris représente un nombre de rayons détectés. On observe un resserrement de l'histogramme autour des faibles angles. Cela montre que l'invention permet d'augmenter la proportion des rayons, émis par la source de lumière 10, et émergeant du capot 12 dans une plage angulaire de $\pm 30°$, voire $\pm 20°$ par rapport à l'axe transversal Z.

La comparaison entre les histogrammes des figures 5D, 5B, 4E et 3C, représentant deux modes de réalisation de l'invention, avec l'histogramme de la figure 3B, montre l'effet technique de l'invention, à savoir une augmentation de la proportion de rayons émergeant de la source de lumière 10 dans une plage angulaire de $\pm 30°$.

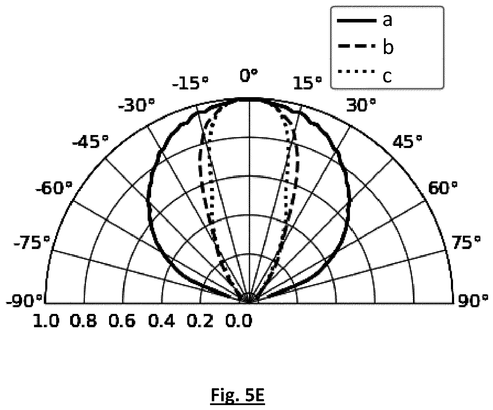

La figure 5E montre les diagrammes d'émission, selon un plan transversal $P_{YZ}$ (ou $P_{XZ}$ selon les modes de réalisation), d'une source de lumière respectivement :

- selon une configuration de l'art antérieur, décrite en lien avec la figure 2A : courbe a ;
- selon une configuration suivant le premier mode de réalisation de l'invention, décrite en lien avec les figures 2C à 2H, selon les paramètres optimisés ($\theta_1$ = 11°).: courbe b ;
- selon une configuration suivant le troisième mode de réalisation de l'invention, décrite en lien avec la figure 5A, selon les paramètres optimisés ($\theta_1$ = 7.5°, $\theta_1'$ = 16°) : courbe c.

Sur la figure 5E, l'axe des abscisses correspond à une intensité lumineuse normalisée. La plage angulaire correspond à l'angle $\alpha$ entre les rayons émis par la source e lumière (i-e émergeant de la face externe 16) et l'axe transversal Z. A l'aide de chaque courbe, on a estimé la plage angulaire $\Delta\theta_{0.5}$ pour laquelle l'intensité lumineuse normalisée est égale à 0.5. Les valeurs de $\Delta\theta_{0.5}$ issues des courbes a, b et c sont respectivement $\pm 58°$, $\pm 24°$, $\pm 20°$. Cela confirme le fait que l'invention permet de resserrer le faisceau lumineux émis par l'élément d'émission 11 en réduisant la plage angulaire par rapport à l'axe transversal Z. Comme on pouvait le constater en comparant les figures 3C et 5B, la figure 5E confirme que le resserrement est plus prononcé en mettant en oeuvre le troisième mode de réalisation par rapport au premier mode de réalisation.

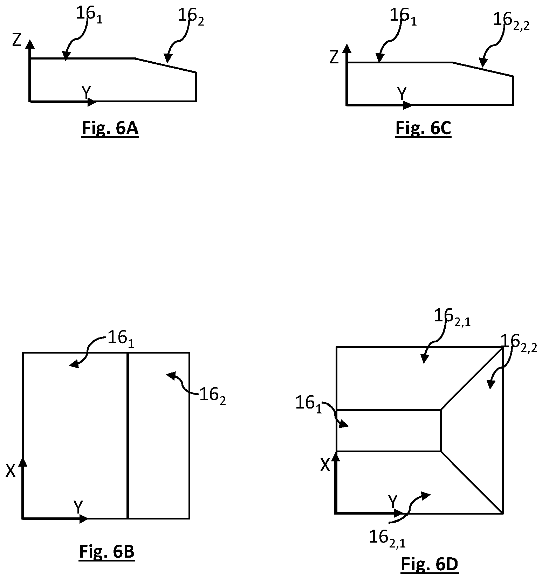

Les figures 6A et 6B illustrent une variante du premier mode de réalisation, selon laquelle la face externe 16 ne comporte qu'une seule partie périphérique $16_2$ s'étendant autour de la partie centrale $16_1$. Les figures 6C et 6D illustrent une variante du deuxième mode de réalisation, selon laquelle la face externe 16 comporte trois parties périphériques : deux parties $16_{2,1}$, et une partie référencée $16_{2,2}$.

Les inventeurs ont modélisé l'utilisation d'une source de lumière selon les premier et deuxième modes de réalisation, en utilisant les paramètres $\theta$, $d_2$ optimisés comme décrit en lien avec la figure 4D, sur un capteur de gaz tel que représenté sur la figure 1A. La source de lumière 10 est disposée de telle sorte que l'axe transversal Z corresponde à l'axe central Δ représenté sur la figure 1A. On a estimé une quantité de lumière détectée par le photodétecteur de mesure 20 et par le photodétecteur de référence 23. On a considéré que les parois transversales $3_1$ et $3_2$ sont réfléchissantes, et distantes l'une de l'autre d'une distance h = 1,2 mm. L'axe longitudinal Y de la source de lumière 10 est orthogonal aux parois réfléchissantes $3_1$ et $3_2$.

Le tableau 1 représente, pour le premier et le deuxième mode de réalisation, une augmentation relative de l'intensité ΔI détectée par le photodétecteur et par le photodétecteur de référence, en l'absence de gaz absorbant dans l'enceinte. L'augmentation relative d'intensité relative est définie de telle sorte que :

$$\Delta I = \frac{I - I_A}{I_A}$$

où I et $I_A$ correspondent respectivement à une intensité détectée par le photodétecteur considéré en mettant en oeuvre respectivement une source de lumière selon l'invention (premier mode de réalisation ou deuxième mode de réalisation) et une source de lumière selon l'art antérieur, cf. figure 2A.

Tableau 1

| Mode de réalisation | Photodétecteur de mesure | Photodétecteur de référence |
|---|---|---|
| 1 (figure 2G) | 74% | 44 % |
| 2 (figure 4A) | 146 % | -35 % |

Les résultats reportés dans le tableau 1 montrent que le premier mode de réalisation permet d'augmenter la quantité de lumière détectée par le photodétecteur de mesure et par le photodétecteur de référence. Le deuxième mode de réalisation permet d'augmenter davantage la quantité de lumière détectée par le photodétecteur de mesure (+ 146 %), au détriment de la quantité de lumière détectée par le photodétecteur de référence (- 35 %).

Compte tenu de ces résultats, les inventeurs considèrent que le premier mode de réalisation est particulièrement adapté à un capteur de gaz tel que représenté sur la figure 1A. Le deuxième mode de réalisation semble plus approprié à des configurations de capteurs de gaz comportant une enceinte cylindrique s'étendant autour de l'axe transversal Z.

Les simulations effectuées montrent que l'angle de l'inclinaison d'une partie périphérique, ou de chaque partie périphérique, par rapport à la partie centrale, est de préférence compris entre 5° et 30°, et de préférence compris entre 5° et 25° ou entre 5° et 20°.

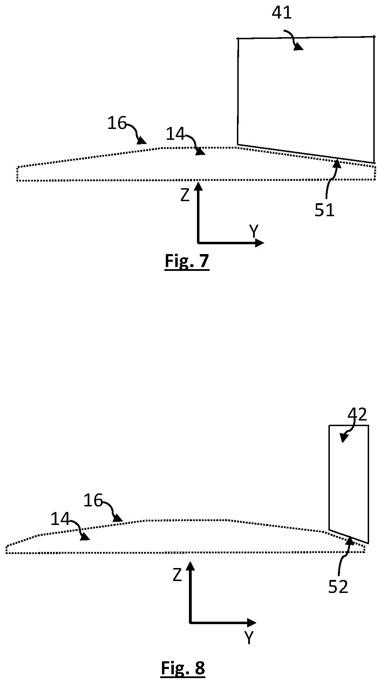

La figure 7 schématise un procédé de fabrication d'une source de lumière selon les premier ou deuxième modes de réalisation, cf. figures 2C, 2G ou 4A. Le capot 14 peut faire l'objet d'un usinage, par exemple une coupe, à l'aide d'un outil de coupe 41, de façon à former une partie périphérique $16_2$ inclinée par rapport à la partie centrale $16_1$. L'outil de coupe comporte une lame 51 biseautée, permettant de former l'inclinaison de la partie périphérique $16_2$. Selon le premier mode de réalisation, l'outil de coupe 41 est translaté parallèlement à l'axe latéral X pour former les parties périphériques $16_2$. Selon le deuxième mode de réalisation, l'outil de coupe 41 est translaté parallèlement à l'axe latéral X pour former les premières parties périphériques $16_{2,1}$, puis parallèlement à l'axe longitudinal Y pour former les deuxièmes parties périphériques $16_{2,2}$. Il peut s'agir d'un outil de coupe de type "Dicing blade ZH05 Series - Disco corporation - Japan".

La figure 8 montre un procédé de fabrication d'une source de lumière selon les troisième ou quatrième modes de réalisation, cf. figure 5A ou 5C. Le capot 14 peut faire l'objet d'un usinage, par exemple une coupe, à l'aide d'un premier outil de coupe 41 et un deuxième outil de coupe 42 de façon à former une partie périphérique $16_2$ inclinée par rapport à la partie centrale $16_1$, selon deux angles d'inclinaison différents. Chaque outil de coupe comporte une lame 51, 52, agencée pour former une partie périphérique inclinée successivement selon les angles d'inclinaison $\theta_1$ et $\theta'_1$. On utilise tout d'abord le premier outil de coupe 41, comme représenté sur la figure 7, puis le deuxième outil de coupe 42.

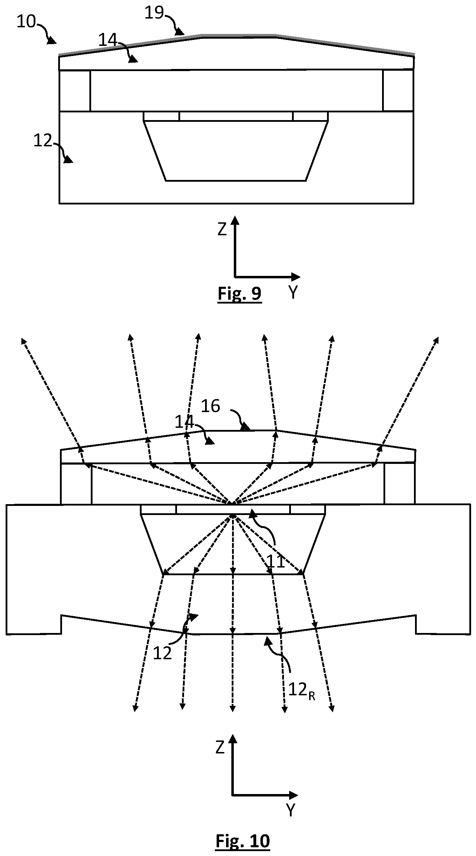

La figure 9 illustre un dépôt d'une couche antireflet 19 (Anti reflective coating) sur la face externe d'une source de lumière telle que décrite en lien avec le premier ou le troisième mode de réalisation. Compte tenu des faibles angles d'inclinaison θ, qui sont généralement inférieurs à 25°, voire 20°, l'inclinaison de chaque face périphérique n'a que peu d'incidence sur l'épaisseur de la couche antireflet 19. En considérant par exemple un angle de 12°, l'épaisseur sur chaque partie périphérique est de 0.98 fois égale à l'épaisseur de la couche antireflet déposée sur la partie centrale. Ainsi, les performances de couche antireflet 19 peuvent être considérées comme spatialement homogènes, car l'épaisseur de cette dernière varie peu. Cette conclusion est valable quel que soit le mode de réalisation, en particulier tant que l'angle d'inclinaison θ reste suffisamment faible, typiquement inférieur à 25° et de préférence à 20 °.

La figure 10 illustre un cinquième mode de réalisation. Selon ce mode de réalisation, le substrat 12, est également structuré. Le substrat comporte ainsi une face externe arrière $12_R$, structurée de la même façon que la face externe 16 du capot 14. L'objectif est d'obtenir une augmentation du rayonnement émis par la source et émergeant du substrat 12 avec une faible incidence par rapport à l'axe transversal Z. Selon un tel mode de réalisation, la source de lumière peut être disposée dans un capteur de gaz, le photodétecteur de référence 23 faisant face au substrat 12.

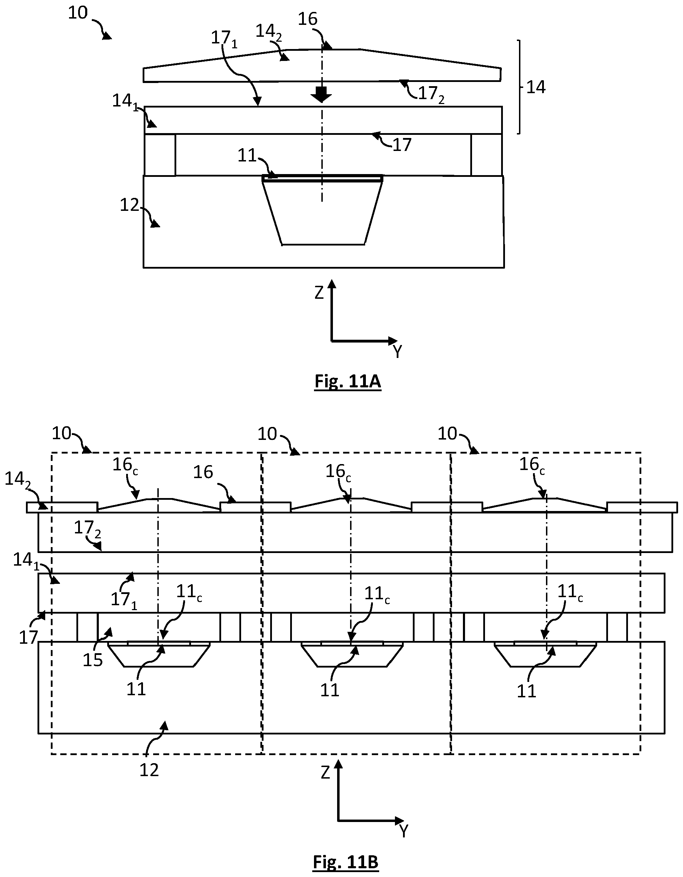

La figure 11A illustre un procédé de fabrication, dans lequel le capot 14 comporte un capot de base $14_1$ et un capot auxiliaire $14_2$. Le capot de base $14_1$ s'étend entre une face interne 17 et une première face $17_1$. La face interne 17 et la première face $17_1$ s'étendent parallèlement l'une à l'autre. Le capot de base $14_1$ est assemblé sur un substrat 12, le capot de base et le substrat renfermant une cavité 15 comportant un élément d'émission 11, par exemple une membrane. L'élément d'émission s'étend selon un plan radial autour d'un centre $11_c$.

Le capot auxiliaire $14_2$ s'étend entre une deuxième face $17_2$ et une face externe 16. Cette dernière fait l'objet d'une structuration, autour d'un centre $16_c$, comme décrit en lien avec les modes de réalisation précédents. Le capot auxiliaire $14_2$ est ensuite assemblé au capot de base $14_1$, de telle sorte que la première face $17_1$ soit disposée contre la deuxième face $17_2$. L'assemblage est réalisé de telle sorte que le centre $11_c$ de l'élément d'émission 11 soit aligné avec le centre $16_c$ de la face externe, parallèlement à l'axe transversal Z. Sur la figure 11A, l'alignement est matérialisé par un trait mixte.

Le capot de base $14_1$ et le capot auxiliaire $14_2$ peuvent être formés d'un même matériau, par exemple du silicium. Alternativement, le capot auxiliaire $14_2$ peut être formé d'un matériau différent du capot de base $14_1$. Le capot auxiliaire $14_2$ peut par exemple être en verre, tandis que le capot de base est en silicium.

L'assemblage du capot auxiliaire $14_2$ sur le capot de base $14_1$ forme un capot 14 de la source de lumière 10.

La figure 11B illustre un procédé de fabrication collective d'une pluralité de sources de lumière selon le mode de réalisation similaire à celui décrit en lien avec la figure 11A. Selon ce procédé, on dispose d'un capot de base $14_1$ et d'un capot auxiliaire $14_2$. De même que dans le procédé schématisé sur la figure 11A, le capot de base $14_1$ s'étend entre une face interne 17 et une première face $17_1$. La face interne 17 et la première face $17_1$ s'étendent parallèlement l'une à l'autre. Le capot de base $14_1$ est assemblé sur un substrat 12, le capot de base et le substrat renferment une pluralité de cavités 15, chaque cavité 15 comportant un élément d'émission 11, par exemple une membrane. Chaque élément d'émission 11 s'étend selon un plan radial autour d'un centre $11_c$. L'ensemble formé par le capot de base, le substrat 12, la cavité 15 et la membrane 11 correspond à une source de lumière de base.

Le capot auxiliaire $14_2$ s'étend entre une deuxième face $17_2$ et une face externe 16. Cette dernière fait l'objet d'une structuration, autour de centres $16_c$, distincts les uns des autres. La structuration comporte la réalisation d'au moins une partie périphérique $16_2$ inclinée par rapport à des parties centrales, parallèles à la deuxième face $17_2$, chaque partie centrale passant respectivement par chaque centre $16_c$. Le capot auxiliaire $14_2$ est ensuite assemblé au capot de base $14_1$, de telle sorte que la première face $17_1$ soit disposée contre la deuxième face $17_2$. L'assemblage est réalisé de telle sorte que chaque centre $11_c$ d'un élément d'émission soit aligné avec un centre $16_c$ de la face externe 16, parallèlement à l'axe transversal Z. Sur la figure 11B, l'alignement est matérialisé par un trait mixte. Un tel procédé permet une formation simultanée de plusieurs sources de lumière 10, ces dernières pouvant être séparées les unes des autres. Sur la figure 11B, chaque source de lumière 10 est matérialisée par un cadre en pointillés.

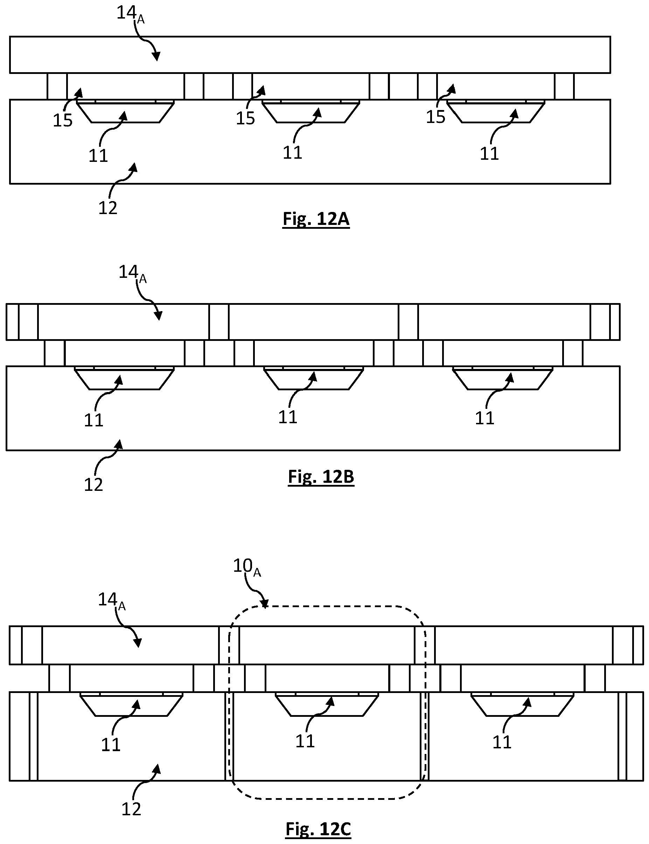

Les figures 12A à 12C schématisent un procédé de fabrication collective de sources de lumière $10_A$ selon l'art antérieur, dites sources de lumière de base. Selon un tel procédé, chaque source de lumière de base est formée par un élément d'émission 11 (notamment une membrane), s'étendant selon un plan radial, dans une cavité 15 délimitée par un capot $14_A$ et un substrat 12. Le capot $14_A$ s'étend entre deux faces parallèles. Les figures 12B et 12C représentent une séparation de chaque source de lumière de base $10_A$, par une découpe du capot $14_A$ (cf. figure 12B) puis du substrat (figure 12C). Sur la figure 12C, on a matérialisé, par un cadre en pointillés, une source de lumière $10_A$ ainsi obtenue.

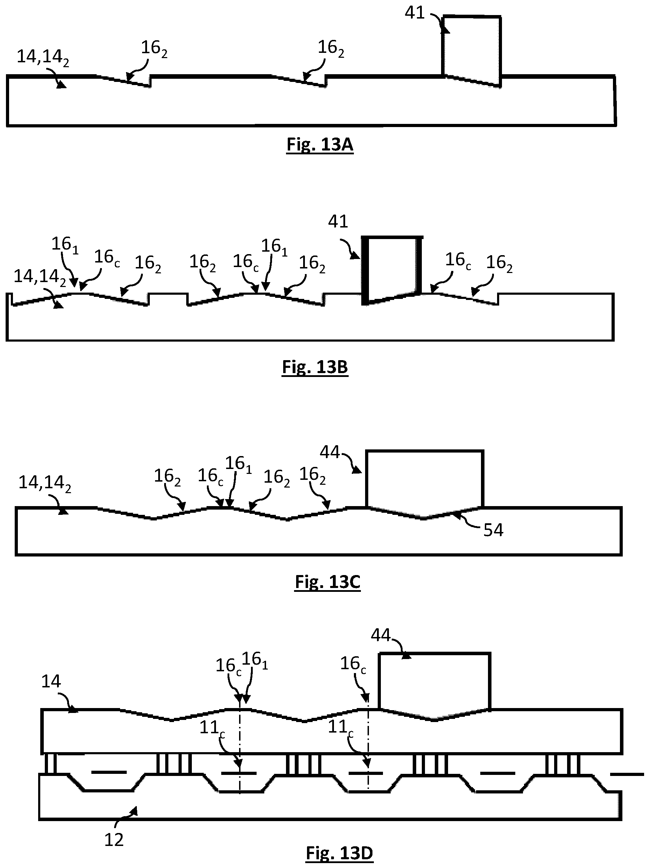

Les figures 13A à 13C représentent différentes façons de structurer une face externe 16, cette dernière pouvant être :

- une face externe d'un substrat 14, ce dernier étant initialement tel que le substrat $14_A$ représenté sur la figure 12A ;
- une face externe d'un substrat auxiliaire $14_2$, tel que décrit en lien avec la figure 11B.

Sur les figures 13A et 13B, la structuration est effectuée en mettant en oeuvre un outil de coupe 41, tel que décrit en lien avec la figure 7A. Cela permet de ménager, sur une même face externe, différentes parties périphériques $16_2$ s'étendant respectivement autour de différents parties centrales $16_1$.

Sur la figure 13C, la structuration est effectuée en mettant en oeuvre un outil 44, comportant une lame 54 en forme de V. cela permet de former simultanément deux parties périphériques $16_2$ sur la face externe. La figure 13D montre l'application d'un outil de coupe 44 sur un substrat 14, qui présente initialement une forme correspondant au substrat 14A représenté sur la figure 12A.

Les structurations représentées sur les figures 13A à 13C peuvent être effectuées sur la face externe $16_2$ d'un capot décrit en lien avec la figure 11B.

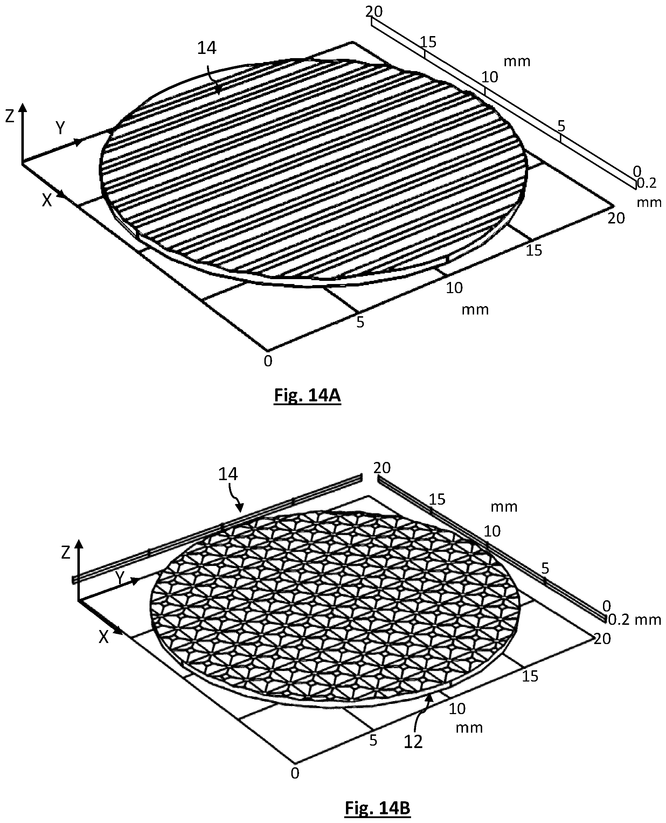

Les figures 14A et 14B montrent un résultat de l'application de procédés de fabrication collective de sources de lumière 10. Les procédés de fabrication collective sont ceux décrits en lien avec la figure 11B, ou 13A à 13D. Sur la figure 14A, on a représenté une fabrication de sources de lumière selon le premier mode de réalisation. Sur la figure 14B, on a représenté une fabrication de sources de lumière selon le deuxième mode de réalisation.

Les sources de lumière selon l'invention pourront être utilisées dans des capteurs de gaz, ces derniers appliqués à différents domaines, par exemple l'environnement, en particulier le contrôle de la pollution atmosphérique, l'industrie, par exemple l'industrie chimique, pétrolière ou agroalimentaire, ou la santé.

**Revendications**

1. Source de lumière infrarouge (10), comportant :

   - un élément d'émission (11), s'étendant selon un plan radial ($P_{XY}$), autour d'un centre de l'élément d'émission ($11_c$), l'élément d'émission étant configuré pour s'échauffer, l'échauffement conduisant à une émission de lumière infra-rouge ;
   - une cavité (15), dans laquelle s'étend l'élément d'émission, la cavité étant délimitée par un capot (14), disposé face à l'élément d'émission (11), le capot comportant une face interne (17), disposée en regard de l'élément d'émission (11) et une face externe (16), définissant une interface entre le capot (14) et un milieu extérieur à la source de lumière;
   - le capot s'étendant, parallèlement à un axe transversal (Z), perpendiculaire au plan radial ($P_{XY}$), selon une épaisseur (e), entre la face interne (17) et la face externe (16);
   - la face externe comportant :

     • une partie centrale plane ($16_1$), s'étendant autour d'un centre ($16_c$) de la face externe, le centre de la face externe étant aligné avec le centre de l'élément d'émission ($11_c$), selon l'axe transversal (Z) ;

   la source de lumière étant **caractérisée en ce que** la face externe comporte :

     • au moins une partie périphérique ($16_2$, $16_{2,1}$, $16_{2,2}$), adjacente de la partie centrale, la partie périphérique étant inclinée par rapport à la partie centrale selon un angle d'inclinaison ($\theta$) ;

   - de telle sorte que dans la partie périphérique, l'épaisseur (e) du capot (14) diminue en fonction d'une distance par rapport à la partie centrale ($16_1$).

2. Source de lumière selon la revendication 1, dans laquelle la partie périphérique ($16_2$, $16_{2,1}$, $16_{2,2}$) s'étend de part et d'autre de la partie centrale ($16_1$).

3. Source de lumière selon l'une quelconque des revendications précédentes, dans laquelle la partie périphérique ($16_2$, $16_{2,1}$, $16_{2,2}$) est inclinée, par rapport à la partie centrale ($16_1$), selon un angle d'inclinaison compris entre 5° et 30°, et de préférence compris entre 5° et 20°.

4. Source de lumière selon l'une quelconque des revendications précédentes, dans laquelle :

   - la partie centrale ($16_1$) s'étend parallèlement à un axe longitudinal (Y) et à un axe latéral (X), l'axe longitudinal étant perpendiculaire à l'axe latéral ;
   - la partie périphérique ($16_2$, $16_{2,1}$) s'étend parallèlement à un premier axe longitudinal ($Y_1$) et à un premier axe latéral ($X_1$);
   - le premier axe longitudinal ($Y_1$) est incliné, selon l'angle d'inclinaison ($\theta$), par rapport à l'axe longitudinal (Y);
   - le premier axe latéral ($X_1$) est parallèle à l'axe latéral (X).

5. Source de lumière selon la revendication 4, comportant une deuxième partie périphérique ($16_{2,2}$), adjacente de la partie centrale, de telle sorte que :

   - la deuxième partie périphérique s'étend parallèlement à un deuxième axe longitudinal ($Y_2$) et un deuxième axe latéral ($X_2$);
   - le deuxième axe latéral ($X_2$) est incliné, selon un deuxième angle d'inclinaison ($\theta_2$), par rapport à l'axe latéral (X);
   - le deuxième axe longitudinal ($Y_2$) est parallèle à l'axe longitudinal (Y).

**6.** Source de lumière selon l'une quelconque des revendications précédentes, dans laquelle la partie périphérique ($16_2$) s'étend selon une longueur comprise entre 5% et 50% d'une longueur du capot (14) la longueur étant déterminée parallèlement à l'axe latéral ou à l'axe longitudinal.

**7.** Source de lumière selon l'une quelconque des revendications précédentes, dans laquelle au moins une partie périphérique est inclinée, par rapport à la partie centrale, selon différents angles d'inclinaison ($\theta_1$, $\theta'_1$), les angles d'inclinaison augmentant avec la distance par rapport à la partie centrale ($16_1$).

**8.** Source de lumière selon l'une quelconque des revendications précédentes, dans lequel la partie centrale (16) est centrée par rapport à l'élément d'émission (11), selon l'axe transversal (Z).

**9.** Source de lumière selon l'une quelconque des revendications précédentes, dans laquelle la face externe (16) s'étend, selon une longueur, le long d'un axe parallèle au plan radial ($P_{XY}$), comprise entre 500 $\mu$m et 2500 $\mu$m.

**10.** Capteur de gaz (1), comportant une enceinte (2) configurée pour contenir un gaz, ainsi qu'une source de lumière (10) et au moins un photodétecteur (20), la source de lumière étant configurée pour émettre un rayonnement lumineux se propageant, à travers l'enceinte, vers le photodétecteur, la source de lumière étant une source de lumière selon l'une quelconque des revendications 1 à 9.

**11.** Capteur de gaz selon la revendication 10, dans lequel l'enceinte (2) est délimitée par au moins une première paroi réfléchissante ($3_1$), s'étendant perpendiculairement au plan radial ($P_{XY}$) de la source de lumière, parallèlement à l'axe transversal (Z).

**12.** Capteur de gaz selon la revendication 11, dans lequel la face externe (16) du capot (14) de la source de lumière (10) comporte une partie centrale plane ($16_1$), s'étendant selon un plan parallèle au plan radial et passant par le centre de la face externe ($16_c$), et dans lequel :

- la partie centrale ($16_1$) s'étend parallèlement à un axe longitudinal (Y) et un axe latéral (X), l'axe longitudinal étant perpendiculaire à l'axe latéral;
- la partie périphérique ($16_2$) s'étend parallèlement à un premier axe longitudinal ($Y_1$) et à un premier axe latéral ($X_1$) ;
- le premier axe longitudinal ($Y_1$) est incliné, selon un angle d'inclinaison ($\theta$), par rapport à l'axe longitudinal (Y) ;
- le premier axe latéral ($X_1$) est parallèle à l'axe latéral (X);

la source de lumière étant agencée de telle sorte que l'axe longitudinal (Y) est perpendiculaire à la première paroi réfléchissante.

**13.** Capteur de gaz selon l'une quelconque des revendications 10 à 12, dans lequel l'enceinte est délimitée par une deuxième paroi réfléchissante ($3_2$), s'étendant parallèlement à la première paroi réfléchissante, la source de lumière s'étendant entre la première et la deuxième parois réfléchissantes.

**14.** Capteur de gaz selon la revendication 13, dans lequel le centre de l'élément d'émission ($11_c$) de la source de lumière (10) est situé à égale distance de chaque paroi réfléchissante,

**15.** Procédé de réalisation d'une source de lumière infrarouge selon l'une quelconque des revendications 1 à 9, comportant :

- a) obtention d'une source de lumière, la source de lumière comprenant un élément d'émission (11), s'étendant parallèlement à un plan radial ($P_{XY}$), autour d'un centre de l'élément d'émission (11c), l'élément d'émission étant configuré pour s'échauffer, l'échauffement conduisant à une émission de lumière infrarouge, et disposé dans une cavité (15) délimitée par un capot, le capot s'étendant entre une face interne (17), disposée face à l'élément d'émission, et une face externe (16), la face externe s'étendant parallèlement au plan radial ($P_{XY}$), autour d'un centre ($16_c$) de la face externe, le centre de la face externe étant aligné avec le centre de l'élément d'émission (11c), selon un axe transversal (Z), perpendiculaire au plan radial, la distance entre la face interne et la face externe définissant une épaisseur (e) du capot ;
- b) usinage de la face externe (16), de façon à former, dans la face externe, au moins une partie périphérique ($16_2$, $16_{2,1}$, $16_{2,2}$), adjacente d'une partie centrale plane ($16_1$) de la face externe, passant par le centre de la face externe ($16_c$), et parallèle au plan radial, la partie périphérique étant inclinée par rapport à la partie centrale de telle sorte que dans la partie périphérique, l'épaisseur du capot diminue en fonction d'une distance par rapport au centre de la face externe.

**Patentansprüche**

1. Infrarotlichtquelle (10), aufweisend:

   - ein Emissionselement (11), das sich in einer radialen Ebene ($P_{XY}$) um eine Mitte des Emissionselements ($11_c$) erstreckt, wobei das Emissionselement zur Erwärmung ausgestaltet ist, wobei die Erwärmung zu einer Emission von Infrarotlicht führt,
   - einen Hohlraum (15), in dem sich das Emissionselement erstreckt, wobei der Hohlraum durch eine zu dem Emissionselement (11) hingewandte Abdeckung (14) begrenzt ist, wobei die Abdeckung eine Innenfläche (17), die dem Emissionselement (11) gegenüber angeordnet ist, und eine Außenfläche (16), die eine Schnittstelle zwischen der Abdeckung (14) und einer außerhalb der Lichtquelle liegenden Umgebung definiert, aufweist,
   - wobei sich die Abdeckung parallel zu einer Querachse (Z) senkrecht zu der radialen Ebene ($P_{XY}$) gemäß einer Dicke (e) zwischen der Innenfläche (17) und der Außenfläche (16) erstreckt,
   - wobei die Außenfläche Folgendes aufweist:

     • einen flachen mittleren Teil ($16_1$), der sich um eine Mitte ($16_c$) der Außenfläche erstreckt, wobei die Mitte der Außenfläche auf die Mitte des Emissionselements ($11_c$) entlang der Querachse (Z) ausgerichtet ist,

   wobei die Lichtquelle **dadurch gekennzeichnet ist, dass** die Außenfläche Folgendes aufweist:

     • mindestens einen Umfangsteil ($16_2$, $16_{2,1}$, $16_{2,2}$) neben dem mittleren Teil, wobei der Umfangsteil bezüglich des mittleren Teils in einem Neigungswinkel ($\theta$) geneigt ist,

   - so dass die Dicke (e) der Abdeckung (14) in dem Umfangsteil in Abhängigkeit von einem Abstand von dem mittleren Teil ($16_1$) abnimmt.

2. Lichtquelle nach Anspruch 1, wobei sich der Umfangsteil ($16_2$, $16_{2,1}$, $16_{2,2}$) beiderseits des mittleren Teils ($16_1$) erstreckt.

3. Lichtquelle nach einem der vorhergehenden Ansprüche, wobei der Umfangsteil ($16_2$, $16_{2,1}$, $16_{2,2}$) bezüglich des mittleren Teils ($16_1$) in einem Neigungswinkel zwischen 5° und 30° und vorzugsweise zwischen 5° und 20° geneigt ist.

4. Lichtquelle nach einem der vorhergehenden Ansprüche, wobei:

   - sich der mittlere Teil ($16_1$) parallel zu einer Längsachse (Y) und einer Querachse (X) erstreckt, wobei die Längsachse senkrecht zu der Querachse verläuft,
   - sich der Umfangsteil ($16_2$, $16_{2,1}$) parallel zu einer ersten Längsachse ($Y_1$) und zu einer ersten Querachse ($X_1$) erstreckt,
   - die erste Längsachse ($Y_1$) in dem Neigungswinkel ($\theta$) zu der Längsachse (Y) geneigt ist,
   - die erste Querachse ($X_1$) parallel zu der Querachse (X) verläuft.

5. Lichtquelle nach Anspruch 4, aufweisend einen zweiten Umfangsteil ($16_{2,2}$) neben dem mittleren Teil, so dass:

   - sich der zweite Umfangsteil parallel zu einer zweiten Längsachse ($Y_2$) und einer zweiten Querachse ($X_2$) erstreckt,
   - die zweite Querachse ($X_2$) in einem zweiten Neigungswinkel ($\theta_2$) zu der Querachse (X) geneigt ist,
   - die zweite Längsachse ($Y_2$) parallel zu der Längsachse (Y) verläuft.

6. Lichtquelle nach einem der vorhergehenden Ansprüche, wobei sich der Umfangsteil ($16_2$) entlang einer Länge zwischen 5% und 50% einer Länge der Abdeckung (14) erstreckt, wobei die Länge parallel zu der Querachse oder zu der Längsachse bestimmt wird.

7. Lichtquelle nach einem der vorhergehenden Ansprüche, wobei mindestens ein Umfangsteil in verschiedenen Neigungswinkeln ($\theta_1$, $\theta'_1$) zu dem mittleren Teil geneigt ist, wobei sich die Neigungswinkel mit dem Abstand von dem

mittleren Teil ($16_1$) vergrößern.

8. Lichtquelle nach einem der vorhergehenden Ansprüche, wobei der mittlere Teil (16) bezüglich des Emissionselements (11) entlang der Querachse (Z) zentriert ist.

9. Lichtquelle nach einem der vorhergehenden Ansprüche, wobei sich die Außenfläche (16) entlang einer parallel zu der radialen Ebene ($P_{XY}$) verlaufenden Achse in einer Länge zwischen 500 μm und 2500 μm erstreckt.

10. Gassensor (1), aufweisend ein Gehäuse (2), das für die Aufnahme eines Gases ausgestaltet ist, sowie eine Lichtquelle (10) und mindestens einen Fotodetektor (20), wobei die Lichtquelle zur Emittierung einer Lichtstrahlung ausgestaltet ist, die sich durch das Gehäuse zu dem Fotodetektor ausbreitet, wobei die Lichtquelle eine Lichtquelle nach einem der Ansprüche 1 bis 9 ist.

11. Gassensor nach Anspruch 10, wobei das Gehäuse (2) durch mindestens eine erste Reflektorwand ($3_1$) begrenzt ist, die sich senkrecht zu der radialen Ebene ($P_{XY}$) der Lichtquelle parallel zu der Querachse (Z) erstreckt.

12. Gassensor nach Anspruch 11, wobei die Außenfläche (16) der Abdeckung (14) der Lichtquelle (10) einen flachen mittleren Teil ($16_1$) aufweist, der sich in einer parallel zu der radialen Ebene verlaufenden Ebene erstreckt und durch die Mitte der Außenfläche ($16_c$) geht, und wobei:

- sich der mittlere Teil ($16_1$) parallel zu einer Längsachse (Y) und einer Querachse (X) erstreckt, wobei die Längsachse senkrecht zu der Querachse verläuft,
- sich der Umfangsteil ($16_2$) parallel zu einer ersten Längsachse ($Y_1$) und zu einer ersten Querachse ($X_1$) erstreckt,
- die erste Längsachse ($Y_1$) in einem Neigungswinkel (θ) zu der Längsachse (Y) geneigt ist,
- die erste Querachse ($X_1$) parallel zu der Querachse (X) verläuft,

wobei die Lichtquelle so angeordnet ist, dass die Längsachse (Y) senkrecht zu der ersten Reflektorwand verläuft.

13. Gassensor nach einem der Ansprüche 10 bis 12, wobei das Gehäuse durch eine zweite Reflektorwand (32) begrenzt ist, die sich parallel zu der ersten Reflektorwand erstreckt, wobei sich die Lichtquelle zwischen der ersten und der zweiten Reflektorwand erstreckt.

14. Gassensor nach Anspruch 13, wobei die Mitte des Emissionselements ($11_c$) der Lichtquelle (10) äquidistant von jeder Reflektorwand angeordnet ist.

15. Verfahren zur Herstellung einer Infrarotlichtquelle nach einem der Ansprüche 1 bis 9, aufweisend:

- a) Erhalten einer Lichtquelle, wobei die Lichtquelle ein Emissionselement (11) umfasst, das sich parallel zu einer radialen Ebene ($P_{XY}$) um eine Mitte des Emissionselements (11c) erstreckt, wobei das Emissionselement so ausgestaltet ist, dass es sich erhitzt, wobei das Erhitzen zu einer Infrarotlichtemission führt, und in einem Hohlraum (15) angeordnet ist, der durch eine Abdeckung begrenzt ist, wobei sich die Abdeckung zwischen einer dem Emissionselement zugewandten Innenfläche (17) und einer Außenfläche (16) erstreckt, wobei sich die Außenfläche parallel zu der radialen Ebene ($P_{XY}$) um eine Mitte ($16_c$) der Außenfläche erstreckt, wobei die Mitte der Außenfläche auf die Mitte des Emissionselements (11c) entlang einer Querachse (Z) senkrecht zu der radialen Ebene ausgerichtet ist, wobei der Abstand zwischen der Innenfläche und der Außenfläche eine Dicke (e) der Abdeckung definiert,
- b) Bearbeiten der Außenfläche (16), um in der Außenfläche mindestens einen Umfangsteil ($16_2$, $16_{2,1}$, $16_{2,2}$) neben einem flachen mittleren Teil ($16_1$) der Außenfläche auszubilden, der durch die Mitte der Außenfläche ($16_c$) geht und parallel zu der radialen Ebene verläuft, wobei der Umfangsteil so zu dem mittleren Teil geneigt ist, dass in dem Umfangsteil die Dicke der Abdeckung in Abhängigkeit von einem Abstand von der Mitte der Außenfläche abnimmt.

**Claims**

1. An infrared light source (10), comprising:

- an emitting element (11), extending as a radial plane ($P_{XY}$), about a center of the emitting element ($11_c$), the emitting element being configured to heat up, the heating leading to an emission of infrared light;
- a cavity (15), in which the emitting element lies, the cavity being bounded by a cover (14), placed facing the emitting element (11), the cover having an internal face (17), placed facing the emitting element (11), and an external face (16), defining an interface between the cover (14) and a medium outside the light source;
- the cover occupying, parallel to a transverse axis (Z), perpendicular to the radial plane ($P_{XY}$), a thickness (e), between the internal face (17) and the external face (16);
- the external face comprising

   • a planar central portion ($16_1$), extending about a center ($16_c$) of the external face, the center of the external face being aligned with the center of the emitting element ($11_c$), along the transverse axis (Z);

the light source being **characterized in that** the external face comprises :

   • at least one peripheral portion ($16_2$, $16_{2,1}$, $16_{2,2}$), adjacent to the central portion, the peripheral portion being inclined with respect to the central portion by an angle of inclination ($\theta$);

- such that, in the peripheral portion, the thickness (e) of the cover (14) decreases as a function of a distance from the central portion ($16_1$).

2. The light source as claimed in claim 1, wherein the peripheral portion ($16_2$, $16_{2,1}$, $16_{2,2}$) lies on either side of the central portion ($16_1$).

3. The light source as claimed in either one of the preceding claims, wherein the peripheral portion ($16_2$, $16_{2,1}$, $16_{2,2}$) is inclined, with respect to the central portion ($16_1$), by an angle of inclination comprised between 5° and 30°, and preferably comprised between 5° and 20°.

4. The light source as claimed in any one of the preceding claims, wherein:

   - the central portion ($16_1$) lies parallel to a longitudinal axis (Y) and to a lateral axis (X), the longitudinal axis being perpendicular to the lateral axis;
   - the peripheral portion ($16_2$, $16_{2,1}$) lies parallel to a first longitudinal axis ($Y_1$) and to a first lateral axis ($X_1$);
   - the first longitudinal axis ($Y_1$) is inclined, by the angle of inclination ($\theta$), with respect to the longitudinal axis (Y);
   - the first lateral axis ($X_1$) is parallel to the lateral axis (X).

5. The light source as claimed in claim 4, comprising a second peripheral portion ($16_{2,2}$), adjacent to the central portion, such that:

   - the second peripheral portion lies parallel to a second longitudinal axis ($Y_2$) and a second lateral axis ($X_2$);
   - the second lateral axis ($X_2$) is inclined, by a second angle of inclination ($\theta_2$), with respect to the lateral axis (X);
   - the second longitudinal axis ($Y_2$) is parallel to the longitudinal axis (Y).

6. The light source as claimed in any one of the preceding claims, wherein the peripheral portion ($16_2$) extends a length comprised between 5% and 50% of a length of the cover (14), this length being measured parallel to the lateral axis or to the longitudinal axis.

7. The light source as claimed in any one of the preceding claims, wherein at least one peripheral portion is inclined, with respect to the central portion, by various angles of inclination ($\theta_1$, $\theta'_1$), the angles of inclination increasing with distance from the central portion ($16_1$).

8. The light source as claimed in any one of the preceding claims, wherein the central portion (16) is centered with respect to the emitting element (11), along the transverse axis (Z).

9. The light source as claimed in any one of the preceding claims, wherein the external face (16) extends, along an axis parallel to the radial plane (PXY), a length comprised between 500 $\mu$m and 2500 $\mu$m.

10. A gas sensor (1), comprising an enclosure (2) configured to contain a gas, a light source (10) and at least one photodetector (20), the light source being configured to emit light radiation that propagates, through the enclosure, to the photodetector, the light source being a light source as claimed in any one of claims 1 to 9.

11. The gas sensor as claimed in claim 10, wherein the enclosure (2) is bounded by at least a first reflective wall (31), which lies perpendicular to the radial plane (PXY) of the light source, parallel to the transverse axis (Z).

12. The gas sensor as claimed in claim 11, wherein the external face (16) of the cover (14) of the light source (10) comprises a planar central portion (161), extending as a plane parallel to the radial plane and passing through the center $(16_c)$ of the external face, and wherein:

- the central portion $(16_1)$ lies parallel to a longitudinal axis (Y) and to a lateral axis (X), the longitudinal axis being perpendicular to the lateral axis;
- the peripheral portion $(16_2)$ lies parallel to a first longitudinal axis $(Y_1)$ and to a first lateral axis $(X_1)$;
- the first longitudinal axis $(Y_1)$ is inclined, by an angle of inclination $(\theta)$, with respect to the longitudinal axis (Y);
- the first lateral axis $(X_1)$ is parallel to the lateral axis (X);

the light source being arranged such that the longitudinal axis (Y) is perpendicular to the first reflective wall.

13. The gas sensor as claimed in any one of claims 10 to 12, wherein the enclosure is bounded by a second reflective wall (32), lying parallel to the first reflective wall, the light source lying between the first and second reflective walls.

14. The gas sensor as claimed in claim 13, wherein the center of the emitting element (11c) of the light source (10) is located at an equal distance from each reflective wall.

15. A method for producing an infrared light source as claimed in any one of claims 1 to 9, comprising:

- a) obtaining a light source, the light source comprising an emitting element (11), lying parallel to a radial plane $(P_{XY})$, about a center of the emitting element $(11_c)$, the emitting element being configured to heat up, the heating leading to an emission of infrared light, and placed in a cavity (15) bounded by a cover, the cover extending between an internal face (17), placed facing the emitting element, and an external face (16), the external face lying parallel to the radial plane $(P_{XY})$, about a center $(16_c)$ of the external face, the center of the external face being aligned with the center of the emitting element $(11_c)$, along the transverse axis (Z) perpendicular to the radial plane, the distance between the internal face and the external face defining a thickness (e) of the cover;
- b) machining the external face (16), so as to form, in the external face, at least one peripheral portion $(16_2, 16_{2,1}, 16_{2,2})$, adjacent to a planar central portion $(16_1)$ of the external face, passing through the center $(16_c)$ of the external face, and parallel to the radial plane, the peripheral portion being inclined with respect to the central portion such that, in the peripheral portion, the thickness of the cover decreases as a function of a distance from the center of the external face.

**Fig. 1A**

**Fig. 1B**

**Fig. 2A**

**Fig. 2B**

**Fig. 2C**

**Fig. 2D**

**Fig. 2E**

**Fig. 2F**

$16_2$

$16_1$

16

14

13

12

Z

X

Y

**Fig. 2G**

$16_1$

$16_2$

$d_1$

X

$X_1$

Y

$Y_1$

$Y'_1$

$Y_1$

θ

$16_2$

**Fig. 2H**

**Fig. 3A**

**Fig. 3B**

**Fig. 3C**

**Fig. 3D**

1 mm

**Fig. 3E**

**Fig. 4A**

**Fig. 4B**

**Fig. 4C**

**Fig. 4D**

**Fig. 4E**

**Fig. 5A**

**Fig. 5B**

**Fig. 5C**

**Fig. 5D**

**Fig. 5E**

$16_1$      $16_2$

Z

Y

**Fig. 6A**

$16_1$      $16_{2,2}$

Z

Y

**Fig. 6C**

$16_1$

X

Y

$16_2$

**Fig. 6B**

$16_{2,1}$      $16_{2,2}$

$16_1$

X

Y

$16_{2,1}$

**Fig. 6D**

**Fig. 7**

**Fig. 8**

**Fig. 9**

**Fig. 10**

**Fig. 11A**

**Fig. 11B**

EP 4 226 143 B1

**Fig. 12A**

**Fig. 12B**

**Fig. 12C**

36

**Fig. 13A**

**Fig. 13B**

**Fig. 13C**

**Fig. 13D**

**Fig. 14A**

**Fig. 14B**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 5026992 A
- WO 2007064370 A
- WO 2018162848 A
- WO 2019081838 A
- US 2015192517 A
- EP 1612540 A
- US 10386298 B
- US 5285131 A